(19) Europäisches Patentamt
European Patent Office
Office européen des brevets

(11) **EP 3 471 006 B1**

(12) **EUROPEAN PATENT SPECIFICATION**

(45) Date of publication and mention
of the grant of the patent:
**15.12.2021 Bulletin 2021/50**

(51) Int Cl.:
**G06F 21/54** (2013.01)     **G06F 11/36** (2006.01)
**G06F 21/44** (2013.01)

(21) Application number: **17196361.4**

(22) Date of filing: **13.10.2017**

(54) **METHOD FOR VERIFYING AN EXECUTION OF A COMPUTER PROGRAM**

VERFAHREN ZUR VERIFIZIERUNG EINER AUSFÜHRUNG EINES COMPUTERPROGRAMMS

PROCÉDÉ PERMETTANT DE VÉRIFIER L'EXÉCUTION D'UN PROGRAMME D'ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.04.2019 Bulletin 2019/16**

(73) Proprietor: **Weeve GmbH**
**10555 Berlin (DE)**

(72) Inventors:
 • **DAVIDSEN, Mathias**
  **24944 Flensburg (DE)**
 • **THOMSEN, Sascha**
  **24943 Flensburg (DE)**
 • **KRUSE, Marvin**
  **24943 Flensburg (DE)**

(74) Representative: **Ullrich & Naumann PartG mbB**
**Schneidmühlstrasse 21**
**69115 Heidelberg (DE)**

(56) References cited:
 • **ERDEM AKTAS ET AL: "DARE: A Framework for Dynamic Authentication of Remote Executions", COMPUTER SECURITY APPLICATIONS CONFERENCE, 2008. ACSAC 2008. ANNUAL, IEEE, PISCATAWAY, NJ, USA, 8 December 2008 (2008-12-08), pages 453-462, XP031376798, ISBN: 978-0-7695-3447-3**
 • **Monrose ET AL: "Distributed Execution with Remote Audit", NDSS Symposium 1999, 4 February 1999 (1999-02-04), XP055446467, Retrieved from the Internet: URL:http://wp.internetsociety.org/ndss/wp-content/uploads/sites/25/2017/09/Distribut ed-Execution-with-Remote-Audit.pdf [retrieved on 2018-01-31]**
 • **Yuqun Chen ET AL: "Oblivious Hashing: A Stealthy Software Integrity Verification Primitive" In: "Information Hiding", 1 January 2003 (2003-01-01), Springer Berlin Heidelberg, Berlin, Heidelberg, XP055044104, ISBN: 978-3-54-000421-9 vol. 2578, pages 400-414, DOI: 10.1007/3-540-36415-3_26, * sections 3.1, 3.2, 4.1, 4.2, 4.3, 5.1 and 5.2 ***
 • **CHRISTIDIS KONSTANTINOS ET AL: "Blockchains and Smart Contracts for the Internet of Things", IEEE ACCESS, vol. 4, 10 May 2016 (2016-05-10), pages 2292-2303, XP011613134, DOI: 10.1109/ACCESS.2016.2566339 [retrieved on 2016-06-03]**

**EP 3 471 006 B1**

**Description**

The described embodiments are to be considered only as illustrative and not restrictive. The scope of the invention is defined by the appended claims, the dependent claims define further embodiments of the invention.

The present invention relates to a method for providing verifiable testimony information for an execution of at least part a computer program, said computer program comprising a series of computer-readable instructions to be executed on a computing entity.

The present invention further relates to a method for verifying an execution of at least part a computer program, said computer program comprising a series of computer-readable instructions to be executed on a computing entity.

The present invention further relates to a method for verifying transmitted data, preferably representing digital assets, between a first entity and a second entity.

The present invention even further relates to a computing entity for providing verifiable testimony information for an execution of at least part a computer program, said computer program comprising a series of computer-readable instructions to be executed on said computing entity.

The present invention even further relates to a system for verifying exchanging data, preferably representing digital assets, between a first entity and a second entity.

The present invention further relates to a supplying entity for providing data, preferably representing digital assets for a receiving entity via a mediating entity.

The present invention further relates to a mediating entity for relying data and/or to add data, preferably representing digital assets, between a third entity and a first entity.

The present invention further relates to a receiving entity for demanding data and/or receiving demanded data.

The present invention further relates to computer readable medium storing a program causing a computer to execute a method for providing verifiable testimony information for an execution of at least part a computer program, said computer program comprising a series of computer-readable instructions to be executed on a computing entity.

The present invention further relates to a computer-readable medium storing a program causing a computer to execute a method for verifying an execution of at least part a computer program, said computer program comprising a series of computer-readable instructions to be executed on a computing entity.

The present invention in further relates to a computer-readable medium storing a program causing a computer to execute a method for verifying transmitting data preferably representing digital assets, between a first entity and a second entity.

Although applicable to any kind of exchanging data, the present invention will be described with regard to data representing a digital asset.

A growing number of things are nowadays interconnected to the Internet and having access to a vast number of data, framing the Internet of Things IoT. Such data ranges from physical measurements, such as temperature and geolocation coordinates to the acknowledgment of an event, such as a payment or the like.

Such data may become tradable: IoT things, called producers, may for instance offer their data and IoT devices, called consumers, "buy" or acquire the data. This gives raise to vast plurality of applications: a hybrid car may for instance autonomously pay an induction loop for the charging of energy while waiting at a redlight crossing, a logistic company may get paid for container transportation, only if it has taken the shortest delivery path and attained an average temperature of the goods throughout the journey or the like.

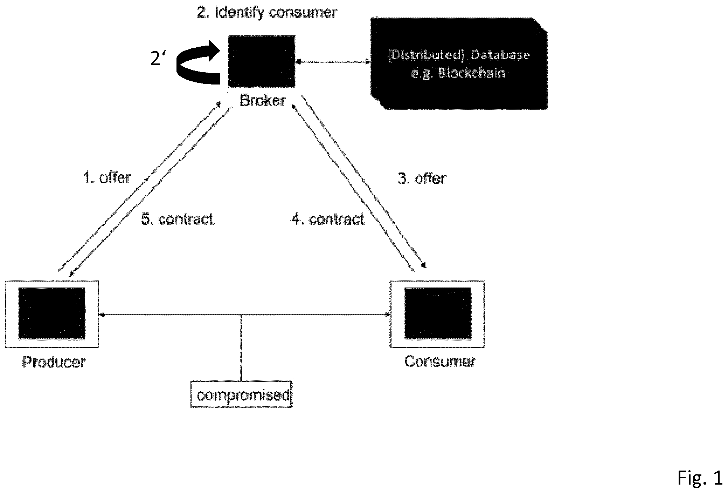

In detail Fig. 1 shows a producer offers some data indicated by reference sign 1, a broker chooses a potential consumer indicated by reference sign 2 and stores the offer optionally in a database indicated by reference sign 2'. The offer is relayed, indicated by reference sign 3 to the consumer who proposes a contract indicated by reference sign 4. The contract is relayed to the producer indicated by reference sign 5.

Such methods can only prevail when certain guarantees about the reliability and trustworthiness of the IoT data can be made. One of the problems is that IoT devices are small computing devices which can be hacked. "Hacking" in this regard means in particular the execution of a program, function, instruction or the like, deviating from the original specification. Hence, a hacked IoT device producing fake data may be a severe threat. For example, a hacked induction loop can ask to issue the payment to an adversarial recipient; a hacked container may lie about the average temperature or the like.

Conventional methods for guaranteeing trustworthiness of data when being exchanged use for instance a central, fully trusted third party as disclosed in the non-patent-literature of Sirbu and Tygar "NetBill: an Internet commerce system optimized for network-delivered services", IEEE Personal Communications, Volume: 2, Issue: 4, August 1995.

In the non-patent-literature of Franklin and Reiter, "Fair exchange with semi-trusted third party", Proceedings of the 4th ACM conference on Computer and communication security, pages 1-5, April 1997, semi-trusted third parties who verify the authenticity of the digital asset, e. g. document in advance are disclosed.

US 8,712,920 B2 describes an apparatus for a cryptographically assisted commercial network system for facilitating buyer-driven conditional purchase offers. The apparatus includes a controller which receives binding purchase offers from prospective buyers. The controller makes purchase offers available globally to potential sellers. Potential sellers then have the option to accept a purchase offer and thus bind the corresponding buyer to a contract.

In US 8,732,066 B2 a method and apparatus for processing conditional purchase are disclosed reducing concerns of sellers by obtaining a payment identifier essentially guaranteeing that the seller may receive payment from the financial account even if the buyer attempts to renege.

Further WO 2017/132641 A1 discloses a method where the blockchain is used to upload, edit and approve documents.

WO 2017/090041 A1 discloses a method for encrypting partial data of the smart contract sent to the Blockchain, and WO 2017/091530 A1 discloses the use of Blockchain for financial transactions. ERDEM AKTAS ET AL: "DARE: A Framework for Dynamic Authentication of Remote Executions", COMPUTER SECURITY APPLICATIONS CONFERENCE, 2008. ACSAC 2008;Monrose ET AL: "Distributed Execution with Remote Audit",NDSS Symposium 1999, 4 February 1999 (1999-02-04), XP055446467,Retrieved from the Internet:URL:http://wp.internetsociety.org/ndss/wp-content/uploads/sites/25/2017/09/Distributed-Execution-with-Remote-Audit.pdf [retrieved on 2018-01-31]; Yuqun Chen ET AL: "Oblivious Hashing: A Stealthy Software Integrity Verification Primitive"In: "Information Hiding", 1 January 2003 (2003-01-01), Springer Berlin Heidelberg, Berlin, Heidelberg, XP055044104,ISBN: 978-3-54-000421-9vol. 2578, pages 400-414, DOI: 10.1007/3-540-36415-3_26 and CHRISTIDISKONSTANTINOS ET AL: "Blockchains and Smart Contracts for the Internet of Things",IEEE ACCESS, vol. 4 , pages 2292-2303, XP011613134,DOI: 10.1109/ACCESS.2016.2566339; disclose relevant prior art in the field of verifiable remote execution.

One of the problems addressed by embodiments of the present invention is therefore the limited flexibility in terms of the underlying computer program code. One of the further problems addressed by embodiments of the present invention is how to ensure the data's and process' real-time integrity. A further problem addressed by embodiments of the present invention is to enhance the security in particular identifying the presence of real-time attacks altering the flow of a program, for example buffer overflow, Return-to-LibC, etc.

In an embodiment the present invention provides a method for providing verifiable testimony information for an execution of least part of a computer program, said computer program comprising a series of computer-readable instructions to be executed on a computing entity, the method comprising a generation procedure and a testify procedure, wherein

said generation procedure comprising the steps of

- Computing evaluation information and verification information wherein said evaluation information being computed dependent on a secret key, at least said part of said computer program provided with at least one breakpoint for initiating execution of a snapshot procedure and a hash function, and wherein said verification information being computed dependent on at least said part of said computer program, snapshot information and on a verification key,

and wherein said testify procedure comprising the steps of

- Executing in a memory of a computing device at least said part of said computer program comprising said at least one defined breakpoint on certain input data,
- Upon reaching a breakpoint during execution of at least said part of said computer program, computing snapshot data by executing said snapshot procedure by a trusted execution environment entity of said computing device, said snapshot procedure determining a current status of output data of at least said part of said executed computer program and applying said hash function on said determined status,
- After completion of said snapshot procedure, resuming execution of at least said part of said computer program,
- Temporarily storing said computed snapshot data associated with said breakpoint,
- Signing said computed snapshot data with said secret key to provide testimony data, and
- Providing verifiable testimony information including said verification information, said input data and said testimony data.

In a further embodiment the present invention provides a method for verifying an execution of at least part of a computer program, said computer program comprising a series of computer-readable instructions to be executed on a computing entity, comprising the steps of

- Receiving verifiable testimony information provided by a method according to one of the claims 1-3,
- Executing the testify procedure of the method according to one of the claims 1-3 with at least said part of said computer program with at least one breakpoint,
- Verifying said execution of at least said part of said computer program by evaluating said computed snapshot data received from the executed part of said computer program and said received verifiable testimony information.

In a further embodiment the present invention provides a method for verifying transmitted data, preferably representing digital assets, between a first entity and a second entity, comprising the steps of

- Providing, by said first entity, first information to said second entity including information of said data to be transmitted and contract information for said data, said contract information including verifiable testimony information for said data, preferably for the quality of said data, said verifiable testimony information for said data being computed by performing a method according to one of the claims 1-3, and a signature for said first information,
- Verifying, by said second entity, said first information, by performing a method according to claim 4 using said provided verifiable testimony information for verification of the testimony data and/or by validating said contract information, using said verification information, said contract information and said signature for said first information.

In an even further embodiment the present invention provides a computing entity for providing verifiable testimony information for an execution of at least part of a computer program, said computer program comprising a series of computer-readable instructions to be executed on said computing entity, said computing entity being adapted to

- Compute evaluation information and verification information, said evaluation information being computed dependent on a secret key, at least said part of said computer program provided with at least one breakpoint for initiating execution of a snapshot procedure and a hash function, and said verification information being computed dependent on at least said part of said computer program, snapshot information and on a verification key,
- Execute in a memory of a computing device at least said part of said computer program comprising said at least one defined breakpoint on certain input data,
- Upon reaching a breakpoint during execution of at least said part of said computer program, to compute snapshot data by executing said snapshot procedure by a trusted execution environment entity of said computing device, said snapshot procedure determining a current status of output data of at least said part of said executed computer program and applying said hash function on said determined status,
- Resume execution of said part of said computer program after completion of said snapshot procedure,
- Temporarily store said computed snapshot data associated with said breakpoint,
- Sign said computed snapshot data with said secret key to provide testimony data and
- Provide testimony verifiable information including said verification information, said input data and said testimony data.

In a further embodiment the present invention provides a system for verifying exchanging data, preferably representing digital assets between a first entity and a second entity, said first entity being adapted to

- Provide first information, to said second entity, including information of said data to be exchanged and contract information for said data, including verifiable testimony information for said data, preferably for the quality of said data, said verifiable testimony information for said data being computed by a method according to one of the claims 1-3 and a signature for said first information,

and said second entity being adapted to

- Verify said first information, preferably said contract information by performing a method according to claim 4 using said provided verifiable testimony information for verification of the testimony data and/or by validating said contract information using said verification information, said contract information and said signature for said first information,

wherein said second entity may be adapted to

- Check said verified contract information for said data and upon a positive result,
- Provide accepting information including agreement information for said data and verifiable testimony information for said agreement information and a computed signature for said accepting information of a third entity, said verifiable testimony information for said agreement information being computed by performing method according to one of the claims 1-3.

In an even further embodiment the present invention provides a supplying entity for providing data, preferably representing digital assets for a second entity, being adapted to

- Provide first information to said second entity, including information of said data to be exchanged and contract information for said data, including verifiable testimony information for said data, preferably for the quality of said data, said verifiable testimony information for said data being computed by a method according to one of the claims 1-3 and a signature for said first information,

and wherein said supplying entity may be further adapted

- to receive a demand message including demand information from said second entity preferably via a mediating entity, said demand message including a description of demanded data and contract information including verifiable testimony information for said demanded data, preferably for the quality of said data, said verifiable testimony information for said demand information being computed by a method according to one of the claims 1-3 and a signature for said demand information of said second entity,
- to verify said demand information, by performing a method according to claim 4 using said provided verifiable testimony information, and
- to initiate said providing of supply information for said demand information upon a positive verification.

In an even further embodiment the present invention provides a mediating entity for relying data and/or to add data, preferably representing digital assets, between a third entity and a first entity, being adapted to perform at least one of the steps of

- Verifying received first information from a first entity, by performing a method according to claim 4 using provided verifiable testimony information for verification and by validating contract information,
- Providing at least said first information to said third entity together with a computed signature for said supply information upon positive verification,
- Verifying received accepting information using provided verifiable testimony information for said accepting information and a received signature,
- Adding additional data to said first information and/or said accepting information, preferably wherein said additional data includes further contract information,
- Providing said accepting information to said first entity upon positive verification.

In an even further embodiment the present invention provides a receiving entity for demanding data and/or receiving demanded data, being adapted to perform at least one of the steps of

- Providing demand information for a first entity, said demand information including a description of data to be demanded and contract information including verifiable testimony information for said demanded data, preferably for the quality of said data, said verifiable testimony information for said demand information being computed by a method according to one of the claims 1-3 and a signature for said demand information of said receiving entity,
- Receiving supply information from said first entity together with a computed signature for said supply information, said supply information including a description of said data to be provided and contract information for said data, including verifiable testimony information for said data, preferably for the quality of said data, said verifiable testimony information for said data being computed by a method according to one of the claims 1-3 and said signature for said supply information being computed by said first entity,
- Verifying contract information of received supply information, said contract information provided in said supply information and performing a method according to claim 4 using said provided verifiable testimony information,
- Checking said verified contract information for said data and upon a positive result
- Providing accepting information including agreement information for said data and verifiable testimony information for said agreement information and a computed signature for said accepting information to said first entity, said verifiable testimony information for said agreement information being computed by performing method according to one of the claims 1-3.

In an even further embodiment the present invention provides a computer-readable medium storing a program causing a computer to execute a method for providing verifiable testimony information for an execution of least part of a computer program, said computer program comprising a series of computer-readable instructions to be executed on a computing entity, the method comprising a generation procedure and a testify procedure, wherein

said generation procedure comprising the steps of

- Computing evaluation information and verification information, wherein said evaluation information being computed dependent on a secret key, at least said part of said computer program provided with at least one breakpoint for initiating execution of a snapshot procedure and a hash function, and wherein said verification information being computed dependent on at least said part of said computer program, snapshot information and on a verification key,

and wherein said testify procedure comprising the steps of

- Executing in a memory of a computing device at least said part of said computer program comprising said at least one defined breakpoint on certain input data,
- Upon reaching a breakpoint during execution of at least said part of said computer program, computing snapshot data by executing said snapshot procedure by a trusted execution environment entity of said computing device, said snapshot procedure determining a current status of output data of at least said part of said executed computer program and applying said hash function on said determined status,
- After completion of said snapshot procedure, resuming execution of at least said part of said computer program
- Temporarily storing said computed snapshot data associated with said breakpoint,
- Signing said computed snapshot data with said secret key to provide testimony data, and
- Providing verifiable testimony information including said verification information, said input data and said testimony data.

In a further embodiment the present invention provides a computer-readable medium storing a program causing a computer to execute a method for verifying an execution of at least part of a computer program, said computer program comprising a series of computer-readable instructions to be executed on a computing entity, comprising the steps of

- Receiving verifiable testimony information provided by a method according to one of the claims 1-3,
- Executing the testify procedure of the method according to one of the claims 1-3 with at least said part of said computer program with at least one breakpoint according to,
- Verifying said execution of at least said part of said computer program by evaluating said computed snapshot data received from the executed part of said computer program and said received verifiable testimony information.

In an even further embodiment the present invention provides a computer-readable medium storing a program causing a computer to execute a method for verifying transmitted data, preferably representing digital assets, between a first entity and a second entity,
comprising the steps of

- Providing, by said first entity, first information to said second entity including information of said data to be transmitted and contract information for said data, said contract information including verifiable testimony information for said data, preferably for the quality of said data, said verifiable testimony information for said data being computed by performing a method according to one of the claims 1-3, and a signature for said first information,
- Verifying, by said second entity, said first information, by performing a method according to claim 4 using said provided verifiable testimony information for verification of the testimony data and/or by validating said contract information, using said verification information, said contract information and said signature for said first information.

At least one embodiment of the present invention may have at least one of the following advantages:

- Guarantee of data truthfulness
- real-time integrity of data and of the process
- high security by enabling identification of real-time attacks altering a computer program flow
- distributed trusted authority avoiding a central trusted third party

The term "message" is to be understood in the most general sense. A "message" may be in particular a data packet or a certain amount of data, which can be sent, exchanged and/or received by a computing entity.
The term "data" is to be understood in the broadest sense. Data may for example be a data request, a data response, an embedded object with content, header and content of a HTML page, converted written information, converted mathematical functions or the like.
The terms "entity", "first entity", "second entity", "third entity", "mediating entity", "supplying entity" and "receiving entity" refer in particular in the claims, preferably in the specification each to a device adapted to perform computing like a personal computer, a tablet, a mobile phone, a server, or the like and comprises one or more processors having one or more cores and may be connectable to a memory for storing one or more applications which is/are adapted to perform corresponding steps of one or more of the embodiments of the present invention. Any application may be software-based and/or hardware-based installed in the memory on which the processor(s) can work on. The devices, entities or the like may be adapted in such a way that the corresponding steps to be computed are performed in an optimized way. For instance different steps may be performed in parallel with a single processor on different of its cores. Further the entity and storage and service entity may be identical forming a single computing device. The device or devices may also be instantiated as a virtual device running on a physical computing resource. Different devices may therefore be executed on said physical computing resource.

The term "computer readable medium" may refer to any kind of medium, which can be used together with a computation device or computer and on which information can be stored. Said information may be any kind of data which can be read into a memory of a computer. For example said information may include program code for executing with said computer. Examples of a computer readable medium are tapes, CD-ROMs, DVD-ROMs, DVD-RAMs, DVD-RWs, BluRay, DAT, MiniDisk, solid state disks SSD, floppy disks, SD-cards, CF-cards, memory-sticks, USB-sticks, EPROM. EEPROM or the like.

The term "computational resource" is to be understood in its broadest sense and refers in particular in the claims, preferably in the specification to any kind of physical and/or virtual computational or compute resource, resource, device, entity or the like adapted to perform computing and which can be used by applications, services, users, etc. to perform certain functions, services, applications or the like. A computational resource may include but is not limited to computes, networks, memories, storages, etc. For instance a compute resource may be a CPU resource that is part of the servers inside the datacenter. Thus a server can have Compute like CPU (or vCPU), Network like Network Interface card (NIC), Memory like RAM and/or Storage like external/internal HDD(s).

The terms "trusted computing environment", "trusted computing entity" or "TCE" and the terms "trusted execution environment" or "TEE" refer in particular in the claims, preferably in the specification to each an entity, device, computing device or a part of isolating and protecting security-critical logic from all other hardware and software running on an entity or server. A trusted computing entity or trusted execution environment provides confidentiality and integrity protection for a trusted application running within a trusted execution environment respectively on said trusting computing entity, ensuring that no application running outside said trusted execution environment can interfere with the trusted application's operation. The trusted execution environment provided or spanned by a trusted computing entity may provide some form of remote attestation allowing remote users to certain the current configuration and behavior of a trusted application. The trusted execution environment may be provided in form of a central processing unit or the like.

The terms "testimony", "testimony information", and "testimony data" are to be understood in their broadest sense and refer to data, information, or the like, which are computed over information, data, to be testified and with which an entity, party or the like can assess trustworthiness of the information for which the testimony information was provided for. As an example a testimony is a cryptographic proof of correct execution of a computing device at runtime.

The term "verifiable" with regard to "testimony information" is to be understood in its broadest sense and refers in particular in the claims, preferably in the specification to testimony information, testimony data, etc. which can be verified using a certain procedure with said verifiable testimony information to determine whether or not the information to be testified was amended, changed, or the like. In other words, verifiable testimony information enables a verification using testimony data to check if data, information, etc. is still unchanged, i.e.in the original state or the like.

The term "evaluation information" is to be understood in its broadest sense and refers in particular in the claims, preferably in the specification to information, data or the like which in particular are used as input, basis, starting point or the like for computing a testimony.

The term "verification information" is to be understood in its broadest sense and refers in particular in the claims, preferably in the specification to information, data or the like representing necessary data for performing a verification of the execution of a computer program.

The term "breakpoint" is to be understood in its broadest sense and refers in particular in the claims, preferably in the specification to data, information, marker, instruction(s) or the like indicating a halt, a temporary stop or the like during the execution of a series of machine-readable instructions at which other procedures can be executed and with which execution can be resumed.

The term "computer program" is to be understood in its broadest sense and refers in particular in the claims, preferably in the specification to one or more machine-readable instructions which can be executed, performed, stored, etc. on a machine, in particular a computing device like a server, a client, etc.

The term "snapshot data" is to be understood in its broadest sense and refers in particular in the claims, preferably in the specification to information, data or the like which reflect a status, condition, level, image, etc. of a computer program.

The term "snapshot information" is to be understood in its broadest sense and refers in particular in the claims, preferably in the specification information, data or the like representing information about how and when snapshotting is performed. In particular "snapshot information" are provided in form of a function for inserting breakpoints into a series of machine-readable instructions.

The formulation "status of output data" is to be understood in its broadest sense and refers in particular in the claims, preferably in the specification to information, data or the like representing current values for parameters, variables, content of registers in a memory or the like of the output data computed by a computer program.

The term "contract information" is to be understood in its broadest sense and refers in particular in the claims, preferably in the specification to information, data or the like indicating in particular conditions, terms, content or the like associated with a written contract in a machine-readable form.

The term "agreement information" is to be understood in its broadest sense and refers in particular in the claims, preferably in the specification to information, data or the like indicating at least partial approval of in particular conditions, terms, content or the like associated with and/or in response to contract information.

The term "smart contract" is to be understood in its broadest sense and refers in particular in the claims, preferably in the specification to a computer protocol facilitating, verifying and/or enforcing a negotiation or performance of a contract or making a contractual clause unnecessary. Smart contracts may have a user interface and may emulate a logic of contractual clauses.

The term "blockchain" is to be understood in its broadest sense and refers in particular in the claims, preferably in the description to a distributed database maintaining a continuously growing list of data records that are hardened against tampering and revision, even by operators of the data storing nodes hosting database. A blockchain comprises for example two kinds of records: so-called transactions and so-called blocks. Transactions may be the actual data to be stored in the blockchain and blocks may be records confirming when and in what sequence certain transactions became journaled as a part of the blockchain database. Transactions may be created by participants and blocks may be created by users who may use specialized software or equipment designed specifically to create blocks. In other words, a blockchain may comprise data structure blocks that hold time stamp badges of valid transactions, wherein each block may include the hash value of a prior block linking the blocks together. The term "blockchain" is e.g. identical to the Bitcoin blockchain as a digital currency was introduced in 2008 and has meanwhile more adoption and attention than any other digital currency up to date. Currently Bitcoin is integrated across several businesses and has several exchange markets.

The term "party" is to be understood in its broadest sense and refers in particular in the claims, preferably in the specification to any kind of person, entity, institution, enterprise, company, user, group of users or entities or devices operated by a person, entity, institution, enterprise, company, user, group of users.

The terms "validating" and "verifying" are to be understood in their broadest sense and refer in particular in the claims, preferably in the specification each to a procedure performing reviewing, investigating, (re)checking, controlling, confirming, (re)assuring, attesting, affirming, certifying, etc.

Further features, advantages and further embodiments are described or may become apparent in the following: Said generation procedure may comprise the step of inserting one or more breakpoints into a computer program by using said snapshot information, preferably in form of a snapshot inserting procedure. This provides an easy and flexible way to provide breakpoints for any kind of computer program or part of it either already having breakpoints or not.

At least said part of said computer program may be executed in an area of said memory to which the trust execution environment entity only has access to. This enhances the security since only the trusted execution environment entity can check the memory, for example the registers in the memory and obtain a memory image for including into snapshot information.

Said hash function may be provided as a cryptographic hash function. A cryptographic hash function has the advantage of being collision-resistant and being a one-way function therefore enhancing the security.

Said a cryptographic hash function may provide results having a fixed length independent of the input. This saves computational resources and in particular overhead for allocating and freeing resources for storing the output is avoided.

Said snapshot data may be computed by applying said hash function on said determined output data status and prior computed snapshot data. This enables an easy way to include prior snapshots successively, further saving computational resources since prior snapshots can then be deleted after computing said snapshot information.

Prior computed snapshot data and said determined current status of the output data may be concatenated prior to applying said hash function. This provides an easy way to include the output data status with said prior snapshot information.

Said inserting of at least one breakpoint may be applied to said parts of each computer program for executing a plurality of at least parts of computer programs with different inputs. This ensures that the breakpoints for each program are provided according to the overall inserting procedure leading to verifiable results later.

Said second entity may be a mediating entity for transmitting data from said first entity to a third entity, wherein said first information received from said first entity may be provided by said second entity to said third entity together with a signature of said second entity to said third entity. This enables to provide a central mediating entity such that no direct knowledge of each other of supplying entities and demanding entities is necessary.

Said provided contract information provided by said second entity may be verified by said third entity by performing a method according to claim 4 using said provided verifiable testimony information, and said verified contract information may be checked and upon a positive result accepting information including agreement information for said data and verifiable testimony information for said agreement information and a computed signature for said accepting information of said third entity may be provided to said second entity, wherein said verifiable testimony information for said agreement information being computed by performing method according to one of the claims 1-3. This enables in a secure way to indicate approval to data to be delivered and the corresponding terms for delivering.

Contract information and verifiable testimony information received by at least one of the entities preferably by each entity, may be verified using said verifiable testimony information by performing a method according to claim 4. This ensures that each entity receiving data verifies said data and said contract terms either as a relaying entity or a final receiving entity.

Demand information may be provided to said first or second entity including a description of said data to be demanded and contract information for said data, said contract information including verifiable testimony information for said data, preferably for the quality of said data, verifiable testimony information for said data being computed by performing a method according to one of the claims 1-3, and a signature for said demand information computed by an entity demanding data. This enables to request data to be delivered under certain terms specified in particular in a smart contract.

Random transaction information may be computed by an entity providing information to another entity and may be included in said information preferably by all non-mediating entities. Transaction information allows identification of the entity demanding or providing information and enhance the security.

After successful verification and/or validation of contract information and/or of said agreement information the corresponding information may be stored by a mediating entity in a blockchain. This enables providing secure storage of requesting, demanding or providing of information for a later corresponding request or supply information.

There are several ways how to design and further develop the teaching of the present invention in an advantageous way. To this end it is to be referred to the patent claims subordinate to the independent claims on the one hand and to the following explanation of further embodiments of the invention by way of example, illustrated by the figure on the other hand. In connection with the explanation of the further embodiments of the invention by the aid of the figure, generally further embodiments and further developments of the teaching will be explained.

In the drawings

Fig 1      shows part of steps of a method according to an embodiment of the present invention;

Fig. 2      shows part of a system according to an embodiment of the present invention;

Fig. 3      shows a snapshot procedure of a method according to an embodiment of the present invention;

Fig. 4      shows part of a message flow of a method according to an embodiment of the present invention;

Fig. 5a,b      each show part of a message flow of a method according to an embodiment of the present invention;

Fig. 6a,b      each show part of a message flow of a method according to an embodiment of the present invention; and

Fig. 7      shows part of a message flow of a method according to an embodiment of the present invention.

Figure 1 shows part of steps of a method according to an embodiment of the present invention

In Fig. 1 an illustration of a trade between two Internet of things IoT devices - producer and consumer - is shown.

In detail Fig. 1 shows a producer offers some data indicated by reference sign 1, a broker chooses a potential consumer indicated by reference sign 2 and stores the offer optionally in a database indicated by reference sign 2'. The offer is relayed, indicated by reference sign 3 to the consumer who proposes a contract indicated by reference sign 4. The contract is relayed to the producer indicated by reference sign 5.

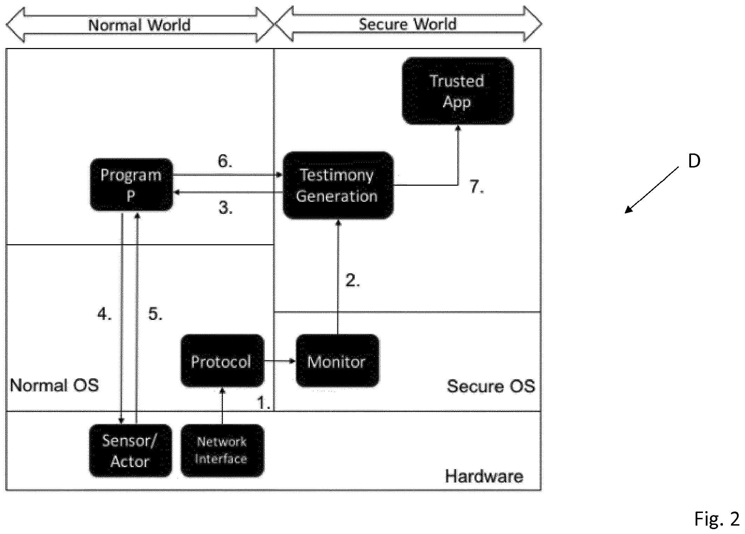

In detail with regard to the following Figs. 2-6 a device computes a program P over some input x denoted by P(x). There are several options for P(x). In general, a program indicates knowledge, possession or performance. Examples include but are not limited to a:

- program P asking a device to measure the temperature x through some attached sensor, processes the data and forwards the data to another program or party.
- program P asking a device to initiate and confirm a payment of x coins by issuing and signing a smart contract.
- program P asks a sensor to open a relay attached to a power cable, such that x electrons go through the cable.

To cryptographically assert the correctness of the program execution P on input x a testimony $\tau$ for program P on input x is computed. A party receiving the testimony $\tau$ shall have the guarantee that the only way the output P(x) was generated is by executing the program P on input x. To compute and verify a testimony three separate procedures, e. g. based on polynomial-time algorithms, (Gen, Testify, Verify), are used such that

- a parameter generation procedure Gen on input of a security parameter $1^n$ and a description of a program P outputs an evaluation key $ek_P$ and a verification key $vk_P$,
- a testimony generation procedure Testify on input of the evaluation key ekp and some input x, outputs a testimony $\tau$, and
- a verification procedure Verify on input of the verification key $vk_P$, some input x and a testimony $\tau$, outputs a bit b where b=1 means a valid, and b=1 means invalid.

The testimony generating party comprises a trust anchor, preferably the TrustZone security extension, leveraging a Trusted Execution Environment TEE. The Trusted Execution Environment provides at least two secure compartments, known as the normal world and secure world, being isolated from each other.

Said Trusted Execution Environment TEE features the effective separation between execution environments. The underlying hardware architecture makes sure that secure world processes are isolated from normal world processes. This means, no normal world program - be it benign or be it malign - can access and alter a secure world program. Vice versa, a secure world program has higher privileges. It can interrupt a normal world program, read the memory area where the program execution takes place and alter the program flow.

In Fig. 2 now steps to obtain a testimony for example a program obtaining an input from the sensor/actor or any other hardware/software entity are shown.

Fig. 2 illustrates in detail the steps to compute a testimony for the execution of some program P.

In an initial step parameters $(ek_P, vk_P) \leftarrow Gen(1^n, P)$ to generate testimonies for a program P are computed. The evaluation key $ek_P$ is stored in the secure world of the testimony generating party. The verification key $vk_P$ is stored where the testimony is verified. This can be either an application in the secure world, called the Trusted App, or a third party e.g., a cloud service or the like.

To generate a testimony the following steps as depicted in Fig. 2 are performed:

1. The device D obtains through a communication protocol in the normal world a message to invoke a testimony.
2. The device D passes the message over to the testimony generation module in the secure world through a secure monitor module. The secure monitor module checks for untrusted and harmful queries to the applications of the secure world.
3. The testimony generation module then initiates the program P running in the normal world.
4. Subject to the program P may be interaction with one or multiple sensors/actors or any other hardware or software entities.
5. The input of said entity or entities x is taken to complete the execution of program P.
6. Upon completion of the program P, the testimony generation module computes a testimony $\tau$ for P(x) by running $\tau \leftarrow Testify(ek_P, x)$.
7. Optionally, the output P(x) along the Testimony $\tau$ is passed to some Trusted App for additional processing.

For a later testimony verification upon receiving a testimony $\tau$ for program P on input x, the testimony is accepted, if $Verify(vk_P, x, \tau) = 1$. Otherwise the testimony is rejected.

In the following a detailed example for computing and verifying a testimony is shown:

$\Sigma$ = (KeyGen, Sign, Verify) is denoted to be a digital signature scheme and H : $\{0,1\}^* \rightarrow \{0,1\}^n$ be a cryptographic hash function mapping arbitrarily length inputs to fixed-length digests.

On input the security parameter $1^n$ and the description of the program P, the parameter generation procedure Gen performs the following steps:

1. Running the key generation of the signature scheme $\Sigma$ to obtain a signing key and a verification key, that is (ssk, svk) $\leftarrow \Sigma.KeyGen(1^n)$.
2. Running a Compiler C on Program P and a snapshotting function $\Phi$ to derive the program with breakpoints P'.
3. Returning the evaluation key $ek_P$= (ssk, H, P') and the verification key vkp = (svk, H, $\Phi$, P).

On input the evaluation key $ek_P$= (ssk, H, P') and input x, the testimony generation procedure Testify performs the following steps:

1. Running of the program P' on input x in the normal world. For the $i^{th}$ snapshot in the secure world, storing the hash of the snapshot, that is

$$h_i = H(h_{i-1} \| \Phi_i(P))$$

where the input to the hash function H is the previously stored digest value $h_{i-1}$ concatenated with the present memory snapshot $\Phi_i(P)$.

2. Returning the outcome P'(x) along the testimony $\tau$ where $\tau \leftarrow \Sigma.\text{Sign}(ssk, h_n)$ is the signature computed over the last digest value $h_n$ with the secret key ssk and $\Phi(P)$ comprising n snapshots.

On input a verification key $vk_P = (svk, H, \Phi, P)$, the input x and a testimony $\tau$, the verification procedure Verify performs the following steps:

1. Compiling the program P to obtain the program with breakpoints $C_\Phi(P) = P'$.
2. Running the program P'(x), re-computing the memory snapshots $\Phi_i$ to $\Phi_n$ in order to compute the digest $h'_n$.
3. Accepting the testimony if $\Sigma.\text{Verify}(svk, h'_n, \tau) = 1$. Otherwise reject the testimony.

In other words at the lowest abstraction level a program P executed on input x a sequence of instructions readable e.g. by a central processor unit. Machine instructions are stored in the memory. The central processor reads the instructions from the memory cells, processes them, writes the output back to a memory cell and/or jumps to the next instruction. It may temporally store some of the outcomes in its internal memory called the register and caches. To verify the execution of a program, e.g. the program execution through internal and external memory traces is captured. Here a trace is a memory snapshot or, more specifically, a snapshot over particular memory cells at a given execution time. The execution time is typically triggered through certain events i.e. breakpoints as mentioned above. To testify the program execution, the secure world performs the snapshotting. It computes a digital signature over the execution traces. The outcome of the digital signature scheme is the testimony.

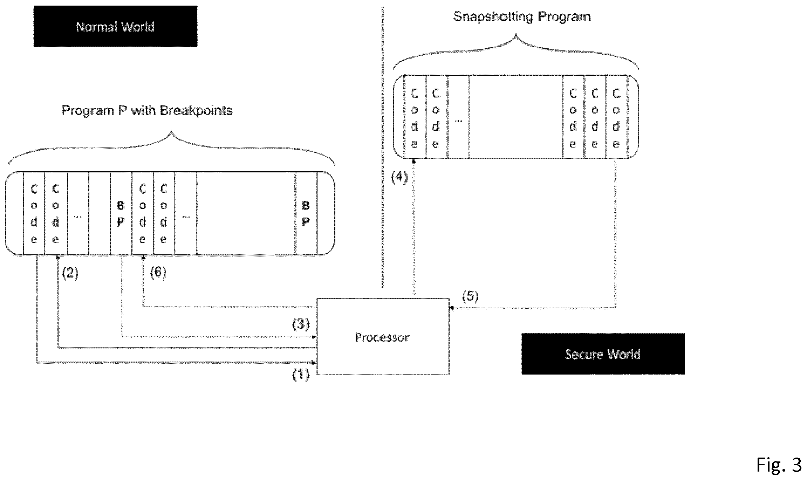

Figure 3 shows a snapshot procedure in a method according to an embodiment of the present invention.

In Fig. 3 now steps to snapshot a program are shown. Conventional programs do not comprise breakpoints for providing or initiating a snapshot procedure. Therefore, first of all breakpoints have to be injected into the program. Consequently a family of compilers $C_\Phi : P \xrightarrow{\Phi} P$ mapping a program $P \in P$ into a program with breakpoints $P' \in P$ where $\Phi$ is the function defining when a snapshot has to take place and over what memory cells the snapshot has to be taken. The function $\Phi$ further injects breakpoints making it possible to snapshot the whole memory of the program or only certain code fragments. It is also possible to snapshot the memory only at the beginning of the program execution yielding a static code testimony or at any execution step yielding a dynamic code testimony. $\Phi(P)$ denotes the set of memory snapshots obtained from applying $\Phi$ to the program P and $\Phi_i(P)$ denotes the snapshot at the $i^{th}$ step. When the normal world executes now a compiled version of the program, that is the program with breakpoints P', on input x the following step as illustrated in Fig. 3 is executed:

Steps (1) and (2)    Program P' executes the instructions as the original program P does until a breakpoint, for short BP, is reached.

Step (3)    The breakpoint event triggers a processor of the computing device D to execute a snapshotting program in the secure world provided by a TEE. The snapshotting program is in a memory region exclusively accessible by the secure normal with the privilege to access the memory cells of P' in the normal world.

Step (4) and (5)    The snapshotting program computes the snapshot as defined in $\Phi$. The $i^{th}$ snapshot is temporarily stored as $\Phi_i(P)$.

Step (6)    After taking the snapshot the snapshotting program instructs the processor to return to the execution of the normal world program P'.

This procedure repeats until program P' terminates.

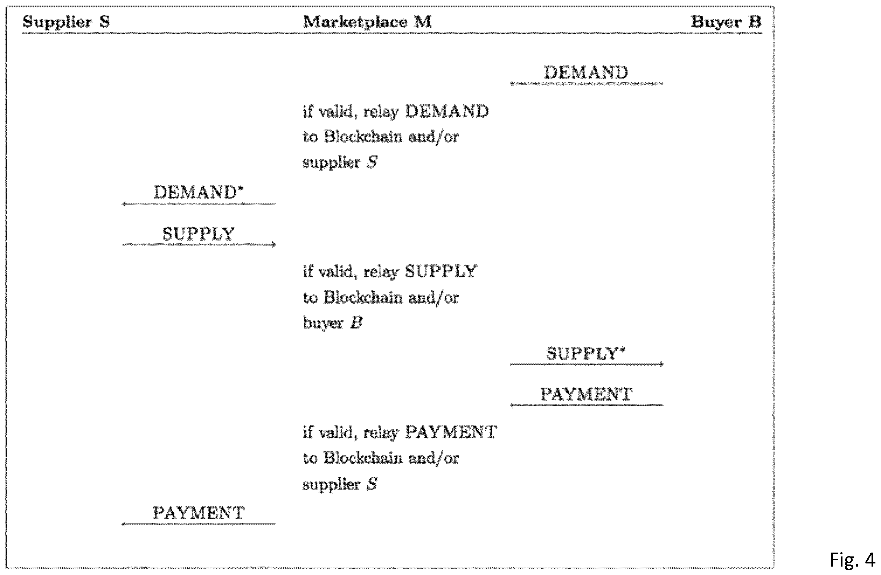

Figure 4 shows a message flow of a method according to an embodiment of the present invention.

Figure 4 shows a smart contract based digital asset exchange protocol respectively an illustration of the message flow between a seller S represented by a supplying entity and a buyer B represented by a receiving entity through some marketplace M represented by a mediating entity exchanging supply and payment messages. The marketplace M may extend the messages with some further information.

In detail a party, called supplier S, has some data P(x), and trades the data through some intermediary entity, called the marketplace M, to some other party, called buyer B. The marketplace M may implement some mechanisms to choose an appropriate supplier or set thereof for every buyer or set thereof.

In other words supplier S and buyer B and possibly in some cases also the marketplace M negotiate the contract terms including demand, supply and payment terms, and deliver the data and payment. For the assessment of the delivery they testify their demand, and supply and issue a payment here via smart contracts. A testified smart contract comprises a testimony that the buyer B factually has a demand and the supplier S factually owns the digital assets for the supply. The buyer's payments may be executed with a cryptocurrency or any other digital asset.

The digital asset protocol is performed as follows:

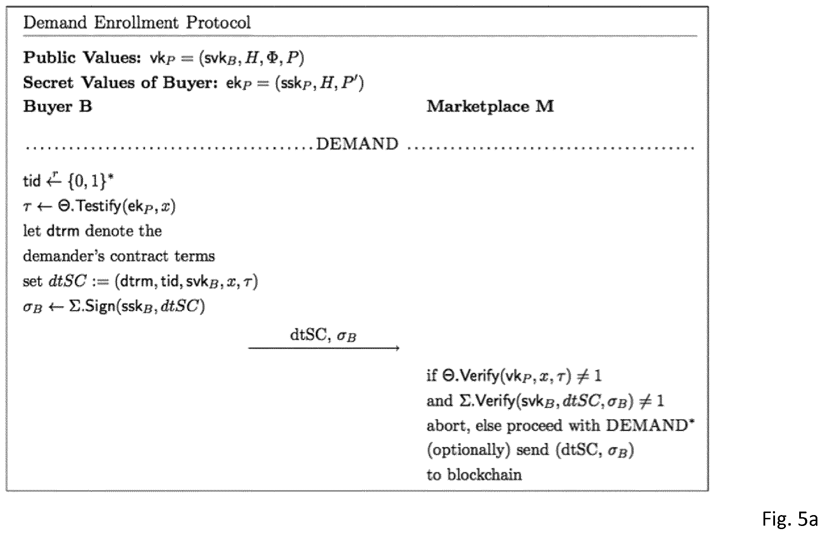

1. The buyer B sends a DEMAND message to the marketplace M, in particular according to Fig. 5a requesting resp. demanding some kind of information. The content of the DEMAND message is a description of the demanded information or input x. If not previously negotiated, the DEMAND message also includes the terms under which the buyer B is willing to trade the demanded information or data. The DEMAND message also comprises a testimony of the demand of the information. The terms and the testimony are written in a smart contract, such that a blockchain is feasible to process and store the DEMAND message.

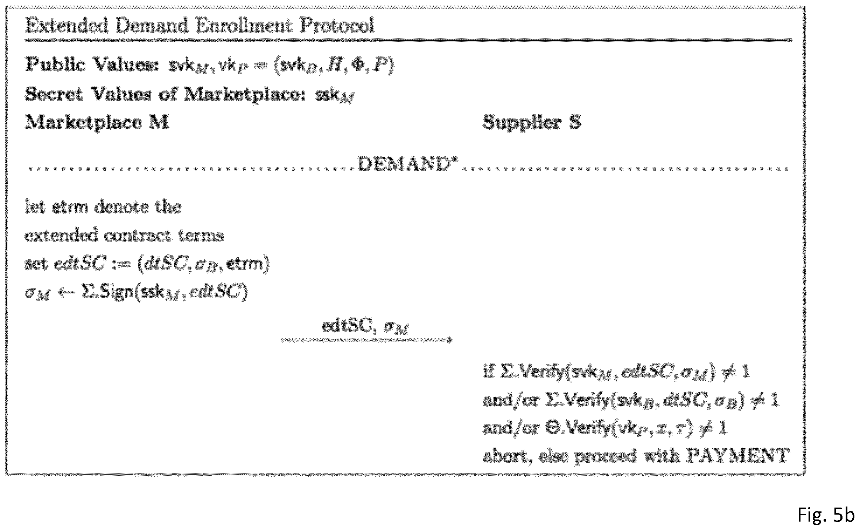

2. Upon receiving the DEMAND message, the marketplace M verifies the validity of the smart contract and testimony. If it fails, the marketplace M aborts. Otherwise, it sends a DEMAND* message, in particular according to Fig. 5b to a potential supplier S along with auxiliary information if needed. The auxiliary information may further specify the demand with terms necessary to complete the deal, such as pricing information, or amount information, time information or the like. Optionally, the marketplace M may store the received smart contract in the blockchain.

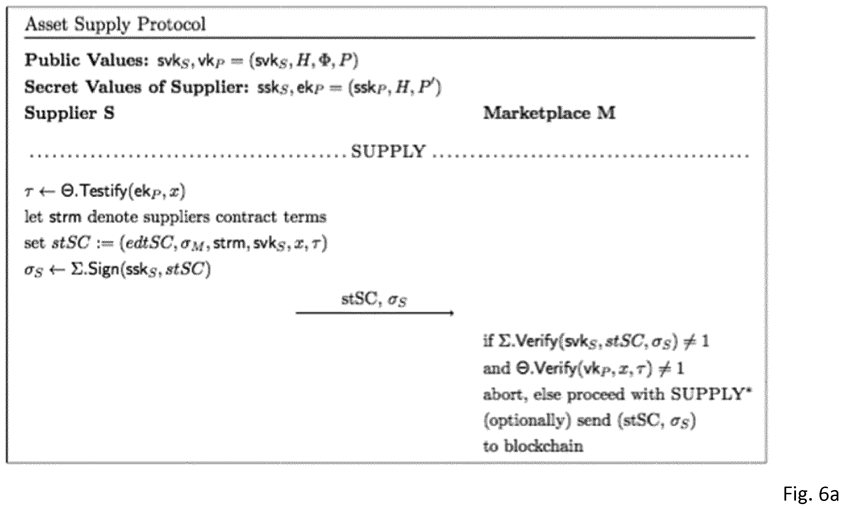

3. The supplier S sends a SUPPLY message to the marketplace M in particular according to Fig. 6a. The content of the SUPPLY message comprising a description of the data to be supplied including the demanded input x, a testimony of the quality of data and may also include further information. If not previously negotiated, the SUPPLY message comprises further a smart contract stating the terms under which the supplier is willing to provide the data x. The terms and the testimony may be included in said smart contract, such that a blockchain is feasible to process and store the smart contract.

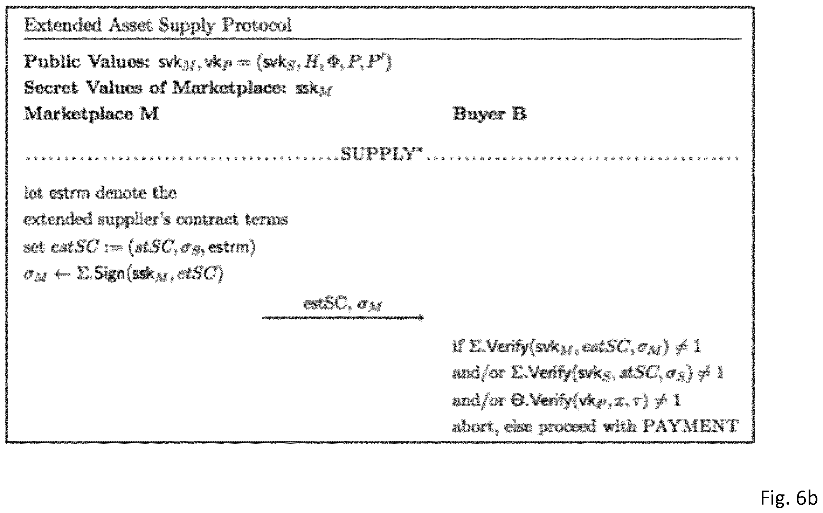

4. Upon reception of the SUPPLY message, the marketplace M verifies in particular according to Fig. 6a the validity of the smart contract and the testimony. If this verification fails, the marketplace M aborts. Otherwise, the marketplace M sends a SUPPLY* message verifies in particular according to Fig. 6b to a potential buyer B along with auxiliary information if needed. The auxiliary information may comprise information for terms necessary to complete the deal, such as pricing information, or amount information, time information or the like. Optionally, the marketplace M may store the smart contract in the blockchain.

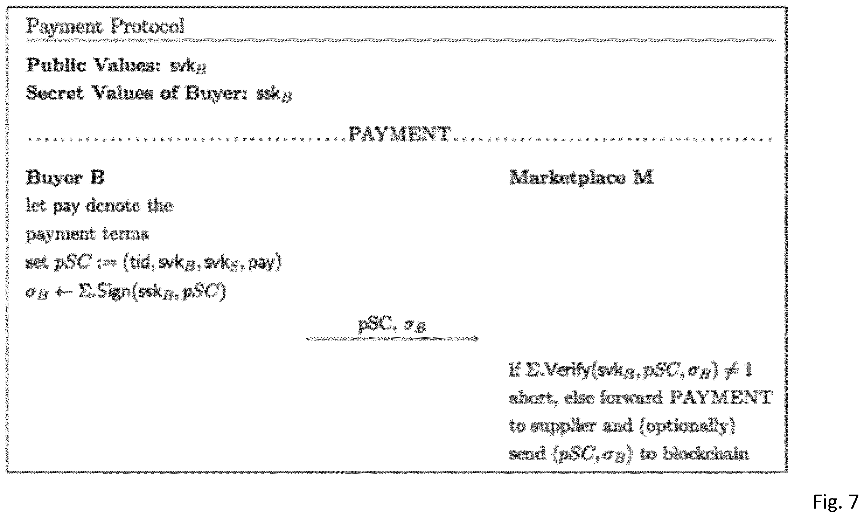

5. Upon reception of the SUPPLY* message, the buyer B verifies in particular according to Fig. 6b the smart contract terms. If the buyer B agrees on the terms, it answers with a PAYMENT message in particular according to Fig. 7. The content of the PAYMENT message comprises a smart contract confirming a payment relating to the previously obtained offer.

6. Upon reception of the PAYMENT message, the marketplace M verifies in particular according to Fig. 7 the smart contract payment terms. If the verification fails, the marketplace M aborts. Otherwise, the marketplace M may send a PAYMENT message to the supplier S, informing the supplier S about a valid payment. Optionally, the marketplace M may send the PAYMENT message to the blockchain.

Figures 5a-b, 6a-b and 7 each show now in detail part of a message flow according to an embodiment of the present invention.

In detail and with reference to Fig. 5a generation and verification of a DEMAND message is described in the following:

$\Sigma$ = (KeyGen, Sign, Verify) denotes a digital signature scheme and $\Theta$ = (Gen, Testify, Verify) denotes a testimony scheme and $vk_P$ = ($svk_s$, H, $\Phi$, P) denotes a verification key being public and $ek_p$ = ($ssk_p$, H, P') denotes a private evaluation key. Further ($ssk_B$, svks) is the private and public signing key of the buyer M.

The procedure runs between the buyer B and marketplace M as follows:

1. The buyer B samples a transaction identifier tid at random.

2. The buyer B executes the program P with input x and computes the testimony $\tau$. To this end, it invokes the testimony generation algorithm Testify on input the evaluation key $ek_P$ for program P and input of the demanded data x as described above.

3. The buyer B generates a testified smart contract dtSC comprising the demand contract terms, denoted as dtrm, along the description of the demanded data x, and a testimony $\tau$ for the execution of program P on input of said demanded data x, the program P, the input for the program P and the transaction identifier and its own identity $svk_B$. The testified smart contract dtSC is signed under the buyer's signing key $ssk_B$. The supplier S sends the testified smart contract dtSC along the signature $\sigma_B$ the marketplace M.

4. The marketplace M verifies the testimony of the testified smart contract dtSC by running $\Theta$. Verify of the above-mentioned testimony scheme on input of the verification key $vk_P$ and the to be testified input x. The marketplace M also verifies the validity of the testified smart contract dtSC by running $\Sigma$.Verify on input the verification key $svk_B$, dtSC and the signature $\sigma_B$. If any of the tests fails, the marketplace M aborts. Otherwise the marketplace M proceeds and optionally sends the testified smart contract dtSC to the blockchain.

The procedure for generation and verification of a DEMAND* message is similar to the procedure of figure 5a which is also referred to.

In detail and with reference to Fig. 5b generation and verification of a DEMAND* message is described in the following:

$\Sigma$ = (KeyGen, Sign, Verify) denotes a digital signature scheme and $\Theta$ = (Gen, Testify, Verify) denotes a testimony scheme, $vk_P$= (svk$_S$, H, $\Phi$, P) denotes a verification key being public and $ek_P$= (ssk$_P$, H, P') denotes a private evaluation key. Further (ssk$_M$, svk$_M$) is the private and public signing key of the marketplace M.

The protocol runs between the marketplace M and supplier S as follows:

1. The marketplace M may include in the testified smart contract dtSC additional contract terms, denoted as etrm, which optionally are necessary to complete the contract. This can be, for example, the addition of a price or amount proposal information. To this end the marketplace M generates an extended testified smart contract, edtSC, and computes a signature $\sigma_M$ over the extended testified contract edtSC using the secret signing key ssk$_M$.

2. The marketplace M sends the extended testified smart contract edtSC along with the signature $\sigma_M$ to the supplier S.

3. The supplier S verifies the validity of the extended testified smart contract edtSC by running $\Sigma$.Verify (svk$_M$, edtSC, $\sigma_M$). Optionally, the supplier S also may verify the validity of the testified smart contract dtSC, in which case, the verification proceeds as of step 4 of the DEMAND message generation and verification, in particular as shown in Fig. 5a. If the verification fails, the supplier S aborts. Otherwise, the supplier S continues with the SUPPLY message, in particular according to Fig. 6a.

In detail and with reference to Fig. 6a generation and verification of a SUPPLY message is described in the following:

$\Sigma$ = (KeyGen, Sign, Verify) denotes a digital signature scheme and $\Theta$ = (Gen, Testify, Verify) denotes a testimony scheme and $vk_P$= (svk$_S$, H, $\Phi$, P) denotes a verification key being public and $ek_p$=(ssk$_p$, H, P') denotes a private evaluation key. Further (ssk$_S$, svk$_S$) is the private and public signing key of the supplier S.

The procedure runs between the supplier S and marketplace M as follows:

1. The supplier S executes the program P on supply input x and computes the testimony $\tau$. To this end, it invokes the testimony generation algorithm Testify on input the evaluation key $ek_P$ for program P and supply input x as described above.

2. The supplier S generates a testified smart contract stSC comprising the contract terms, denoted as strm, along the description of the supply data or input x, and a testimony $\tau$ for the execution of program P on input of said supply data x, the program P, the supply input for the program P, the received edtSC contract and/or a reference to said received edtSC contract and its own identifier svk$_S$. The testified smart contract stSC is then signed under the supplier's signing key ssk$_S$. The supplier S sends the testified smart contract stSC along the signature $\sigma_S$ to the marketplace M.

3. The marketplace M verifies the testimony of the testified smart contract stSC by running $\Theta$. Verify of the above-mentioned testimony scheme on input of the verification key $vk_P$ and the to be testified supply input x. The marketplace M also verifies the validity of the testified smart contract stSC by running $\Sigma$. Verify on input the verification key $svk_S$, stSC and the signature $\sigma_S$. If any of the tests fails, the marketplace M aborts. Otherwise the marketplace M proceeds and optionally sends the testified smart contract stSC to the blockchain.

The procedure for generation and verification of a SUPPLY* message is similar to the procedure of figure 6a which is also referred to.

In detail and with reference to Fig. 6b generation and verification of a SUPPLY* message is described to the following:

$\Sigma$ = (KeyGen, Sign, Verify) denotes a digital signature scheme and $\Theta$ = (Gen, Testify, Verify) be a testimony scheme, $vk_P$ = ($svk_S$, H, $\Phi$, P) a verification key being public and $ek_P$= ($ssk_P$, H, P') a private evaluation key. Further ($ssk_M$, $svk_M$) is the private and public signing key of the marketplace M.

The protocol runs between the marketplace M and buyer B as follows:

1. The marketplace M may include in the testified smart contract stSC additional contract terms, denoted as estrm, which optionally may be included to complete the contract. This can be, for example, the addition of a price or amount proposal information. To this end, the marketplace M generates an extended testified smart contract, estSC, and computes a signature $\sigma_M$ over the extended testified contract estSC using the secret signing key $ssk_M$.

2. The marketplace M sends the extended testified smart contract estSC along with the signature $\sigma_M$ to the buyer B.

3. The buyer B verifies the validity of the extended testified smart contract estSC by running $\Sigma$.Verify ($svk_M$, estSC, $\sigma_M$). Optionally, the buyer B also may verify the validity of the testified smart contract stSC, in which case, the verification proceeds as in step 3 of theSUPPLY message generation and verification, in particular as shown in Fig. 6a. If the verification fails, the buyer B aborts. Otherwise, the buyer B continues with the PAYMENT message of Fig. 7.

Figure 7 shows part of a message flow according to an embodiment of the present invention.

In Fig. 7 again $\Sigma$ = (KeyGen, Sign, Verify) denotes a digital signature scheme. Further ($ssk_B$, $svk_B$) denotes the private and public signing key of the buyer B.

The protocol runs between the buyer B and marketplace M as follows:

1. The buyer B generates a payment smart contract, denoted as pSC. To this end it refers to the supplier's testified contract tSC identified under the transaction identifier tid and identity of the supplier S $svk_S$ and the contract terms trm, etrm. The buyer B adds to those terms its own payment terms pay along its own identity $svk_B$. The buyer B signs the payment smart contract pSC by running the signature generation algorithm with input its secret signing key $ssk_B$ and pSC.

2. The buyer B sends the payment smart contract pSC along the signature $\sigma_B$ to the marketplace M.

3. The marketplace M verifies the validity of the payment smart contract pSC by running the signature verification algorithm $\Sigma$.Verify($svk_B$, pSC, $\sigma_B$) of the above-mentioned digital signature scheme. If the verification fails, the marketplace M aborts. Otherwise, the marketplace M forwards the PAYMENT message to the supplier S identified under $svk_S$ and optionally pushes the payment smart contract pSC to the blockchain.

In summary the present invention provides a testimony and bring applications thereof in the context of blockchain-based smart contracts. The testimony is in particular a cryptographic proof of the correct execution of a IoT device at runtime. In contrast to code attestation techniques being static, the testimony of the present invention is dynamic. It is linked to a particular process, input and certifies the execution of the process. This way, the data's and process' real-time integrity is preserved and not the integrity of the code only. As a result, a testimony identifies the presence of real-time attacks e. g., buffer overflow, Return-to-LibC, Return-Oriented Programming or the like.

The testimony enables as a proof that an IoT device behaves as expected. Specifically, when the device participates in a trade the testimony enables assurance that data or an operation has indeed taken place. The present invention further provides a protocol for testified exchange of digital assets.

The present invention does not rely on a central, trusted third party either being online or offline and building upon a fully distributed authority, the blockchain, enabling an exchange of assets through smart contracts.

The present invention addresses the execution of machine-readable and machine-executable instructions, programs, procedures, etc. and hence, a testimony according to the present invention has far broader expressiveness than what is efficiently obtained from conventional cryptographic proofs, as e.g. disclosed in the non-patent literature of Rosario Gennaro, Craig Gentry, Bryan Parno, Mariana Raykova: Quadratic Span Programs and Succinct NIZKs without PCPs. EUROCRYPT 2013: 626-645 or Eli Ben-Sasson, Alessandro Chiesa, Daniel Genkin, Eran Tromer, Madars Virza: SNARKs for C: Verifying Program Executions Succinctly and in Zero Knowledge. CRYPTO (2) 2013: 90-108.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1.  A method for providing verifiable testimony information for an execution of least part of a computer program, said computer program comprising a series of computer-readable instructions to be executed on a computing entity, the method comprising a generation procedure and a testify procedure, wherein

    said generation procedure comprising the steps of

    - Computing evaluation information and verification information wherein, said evaluation information being computed dependent on a secret key, at least said part of said computer program provided with at least one breakpoint for initiating execution of a snapshot procedure and a hash function, and wherein said verification information being computed dependent on at least said part of said computer program, snapshot information and on a verification key,

    and wherein said testify procedure comprising the steps of

    - Executing in a memory of a computing device at least said part of said computer program comprising said at least one defined breakpoint on certain input data,
    - Upon reaching a breakpoint during execution of at least said part of said computer program, computing snapshot data by executing said snapshot procedure by a trusted execution environment entity of said computing device, said snapshot procedure determining a current status of output data of at least said part of said executed computer program and applying said hash function on said determined status,
    - After completion of said snapshot procedure, resuming execution of at least said part of said computer program
    - Temporarily storing said computed snapshot data associated with said breakpoint,
    - Signing said computed snapshot data with said secret key to provide testimony data, and
    - Providing verifiable testimony information including said verification information, said input data and said testimony data.

2.  The method according to claim 1, wherein said generation procedure comprises the step of inserting one or more breakpoints into a computer program without breakpoints by using said snapshot information, preferably in form of a snapshot inserting procedure, preferably wherein for executing a plurality of at least parts of computer programs with different inputs, said inserting of at least one breakpoint is applied to said parts of each computer program.

3.  The method according to one of the claims 1-2, wherein at least said part of said computer program is executed in an area of said memory to which the trusted execution environment entity only has access to
    and/or

    wherein said hash function is provided as a cryptographic hash function, preferably wherein said cryptographic hash function provides results having a fixed length independent of the input
    and/or
    wherein said snapshot data is computed by applying said hash function on said determined output data status and prior computed snapshot data, preferably wherein said prior computed snapshot data and said determined current status of the output data are concatenated prior to applying said hash function.

4.  A method for verifying an execution of at least part of a computer program, said computer program comprising a series of computer-readable instructions to be executed on a computing entity, comprising the steps of

- Receiving verifiable testimony information provided by a method according to one of the claims 1-3,
- Executing the testify procedure of the method according to one of the claims 1-3 with at least said part of said computer program with said at least one defined breakpoint on said input data,
- Verifying said execution of at least said part of said computer program by evaluating said computed snapshot data received from the executed part of said computer program and said received verifiable testimony information.

5. A method for verifying transmitted data, preferably representing digital assets, between a first entity and a second entity,

comprising the steps of

- Providing, by said first entity, first information to said second entity including information of said data to be transmitted and contract information for said data, said contract information including verifiable testimony information for said data, preferably for the quality of said data, said verifiable testimony information for said data being computed by performing a method according to one of the claims 1-3, and a signature for said first information,
- Verifying, by said second entity, said first information, by performing a method according to claim 4 using said provided verifiable testimony information for verification of the testimony data and/or by validating said contract information, using said verification information, said contract information and said signature for said first information.

preferably wherein
said second entity is a mediating entity for transmitting data from said first entity to a third entity, wherein said first information received from said first entity is provided by said second entity to said third entity together with a signature of said second entity to said third entity,
preferably wherein
said provided contract information provided by said second entity are verified by said third entity by performing a method according to claim 4 using said provided verifiable testimony information, and said verified contract information are checked and upon a positive result accepting information including agreement information for said data and verifiable testimony information for said agreement information and a computed signature for said accepting information of said third entity are provided to said second entity, wherein said verifiable testimony information for said agreement information being computed by performing method according to one of the claims 1-3.

6. The method according to claim 5, wherein contract information and verifiable testimony information received by at least one of the entities preferably by each entity, is verified using said verifiable testimony information by performing a method according to claim 4.

7. The method according to one of the claims 5-6, wherein demand information are provided to said first or second entity including a description of said data to be demanded and contract information for said data, said contract information including verifiable testimony information for said data, preferably for the quality of said data, verifiable testimony information for said data being computed by performing a method according to one of the claims 1-3, and a signature for said demand information, computed by an entity demanding dataand/or

wherein random transaction information are computed by an entity providing information to another entity and included in said information, preferably by all non-mediating entities and/or
wherein after successful verification and/or validation of contract information and/or of said agreement information the corresponding information are stored by a mediating entity, in a blockchain.

8. A computing entity for providing verifiable testimony information for an execution of at least part of a computer program according to a method according to one of the claims 1-3, said computer program comprising a series of computer-readable instructions to be executed on said computing entity, said computing entity being adapted to

- Compute evaluation information and verification information, said evaluation information being computed dependent on a secret key, at least said part of said computer program provided with at least one breakpoint for initiating execution of a snapshot procedure and a hash function, and said verification information being computed dependent on at least said part of said computer program, snapshot information and on a verification key,

- Execute in a memory of a computing device at least said part of said computer program comprising said at least one defined breakpoint on certain input data,

- Upon reaching a breakpoint during execution of at least said part of said computer program, to compute snapshot data by executing said snapshot procedure by a trusted execution environment entity of said computing device, said snapshot procedure determining a current status of output data of at least said part of said executed computer program and applying said hash function on said determined status,

- Resume execution of said part of said computer program after completion of said snapshot procedure,

- Temporarily store said computed snapshot data associated with said breakpoint,

- Sign said computed snapshot data with said secret key to provide testimony data and

- Provide testimony verifiable information including said verification information, said input data and said testimony data.

9. A system for verifying exchanging data, preferably representing digital assets between a first entity and a third entity, the system comprising the first entity and the second entity, Said first entity being adapted to

- Provide first information to said third entity via a mediating entity according to claim 11 including information of said data to the exchanged and contract information for said data, including verifiable testimony information for said data, preferably for the quality of said data, said verifiable testimony information for said data being computed by a method according to one of the claims 1-3 with a computing entity according to claim 8 and a signature for said first information and said third entity being adapted to

- Verify said first information, preferably said contract information, by performing a method according to claim 4 using said provided verifiable testimony information for verification of the testimony data and/or by validating said contract information using said verifiable testimony information, said contract information and said signature for said first information, wherein said third entity may be adapted to

- Check said verified contract information for said data and upon a positive result

- Provide, accepting information including agreement information for said data and verifiable testimony information for said agreement information and a computed signature for said accepting information of the third entity, said verifiable testimony information for said agreement information being computed by performing method according to one of the claims 1-3.

10. A supplying entity for providing data, preferably representing digital assets for a third entity, being adapted to

- Provide first information, to said third entity, including information of said data to be exchanged and contract information for said data, including verifiable testimony information for said data, preferably for the quality of said data, said verifiable testimony information for said data being computed by a method according to one of the claims 1-3 and a signature for said first information,

and wherein said supplying entity may be further adapted

- to receive a demand message including demand information from said third entity preferably via a mediating entity, said demand message including a description of demanded data and contract information including verifiable testimony information for said demanded data, preferably for the quality of said data, said verifiable testimony information for said demand information being computed by a method according to one of the claims 1-3 and a signature for said demand information of said third entity,

- to verify said demand information, by performing a method according to claim 4 using said provided verifiable testimony information, and

- to initiate said providing of supply information for said demand information upon a positive verification.

11. A mediating entity for relying data and/or to add data, preferably representing digital assets, between a third entity and a first entity, being adapted to perform at least one of the steps

- Verifying received first information from the first entity, by performing a method according to claim 4 using provided verifiable testimony information for verification and by validating contract information,

- Providing at least said first information to said third entity together with a computed signature for said first information upon positive verification,

- Verifying received accepting information using provided verifiable testimony information for said accepting information and a received signature,
- Adding additional data to said first information and/or said accepting information, preferably wherein said additional data includes further contract information,
- Providing said accepting information to said first entity upon positive verification.

12. A receiving entity for demanding data and/or receiving demanded data, being adapted to perform at least one of the steps

- Providing demand information for a first entity, said demand information including a description of data to be demanded and contract information including verifiable testimony information for said demanded data, preferably for the quality of said data, said verifiable testimony information for said demand information being computed by a method according to one of the claims 1-3 and a signature for said demand information of said receiving entity,
- Receiving supply information from said first entity together with a computed signature for said supply information, said supply information including a description of said data to be provided and contract information for said data, including verifiable testimony information for said data, preferably for the quality of said data, said verifiable testimony information for said data being computed by a method according to one of the claims 1-3 and said signature for said supply information being computed by said first entity,
- Verifying contract information of received supply information, said contract information provided in said supply information and performing a method according to claim 4 using said provided verifiable testimony information,
- Checking said verified contract information for said data and upon a positive result providing, accepting information including agreement information for said data and verifiable testimony information for said agreement information and a computed signature for said accepting information to said first entity, said verifiable testimony information for said agreement information being computed by performing method according to one of the claims 1-3.

13. A computer-readable medium storing a program causing a computer to execute a method for providing verifiable testimony information for an execution of least part of a computer program, said computer program comprising a series of computer-readable instructions to be executed on a computing entity, the method comprising a generation procedure and a testify procedure, wherein

said generation procedure comprising the steps of

- Computing evaluation information and verification information, wherein said evaluation information being computed dependent on a secret key, at least said part of said computer program provided with at least one breakpoint for initiating execution of a snapshot procedure and a hash function, and wherein said verification information being computed dependent on at least said part of said computer program, snapshot information and on a verification key,

and wherein said testify procedure comprising the steps of

- Executing in a memory of a computing device at least said part of said computer program comprising said at least one defined breakpoint on certain input data,
- Upon reaching a breakpoint during execution of at least said part of said computer program, computing snapshot data by executing said snapshot procedure by a trusted execution environment entity of said computing device, said snapshot procedure determining a current status of output data of at least said part of said executed computer program and applying said hash function on said determined status,
- After completion of said snapshot procedure, resuming execution of at least said part of said computer program
- Temporarily storing said computed snapshot data associated with said breakpoint,
- Signing said computed snapshot data with said secret key to provide testimony data, and
- Providing verifiable testimony information including said verification information, said input data and said testimony data.

14. A computer-readable medium storing a program causing a computer to execute a method for verifying an execution of at least part of a computer program, said computer program comprising a series of computer-readable instructions to be executed on a computing entity, comprising the steps of

- Receiving verifiable testimony information provided by a method according to one of the claims 1-3,
- Executing the testify procedure of the method according to one of the claims 1-3 with at least said part of said computer program with said at least one defined breakpoint on said input data,
- Verifying said execution of at least said part of said computer program by evaluating said computed snapshot data received from the executed part of said computer program and said received verifiable testimony information.

15. A computer-readable medium storing a program causing a computer to execute a method for verifying transmitted data, preferably representing digital assets, between a first entity and a second entity,
comprising the steps of

- Providing, by said first entity, first information to said second entity including information of said data to be transmitted and contract information for said data, said contract information including verifiable testimony information for said data, preferably for the quality of said data, said verifiable testimony information for said data being computed by performing a method according to one of the claims 1-3, and a signature for said first information,
- Verifying, by said second entity, said first information, by performing a method according to claim 4 using said provided verifiable testimony information for verification of the testimony data and/or by validating said contract information, using said verification information, said contract information and said signature for said first information.

## Patentansprüche

1. Verfahren zum Bereitstellen von verifizierbaren Zeugnisinformationen für eine Ausführung zumindest eines Teils eines Computerprogramms, wobei das Computerprogramm eine Anzahl von computerlesbaren Instruktionen, die auf einer Computerentität ausgeführt werden sollen, aufweist, wobei das Verfahren eine Erzeugungsprozedur und eine Zeugnisprozedur aufweist, wobei

die Erzeugungsprozedur die Schritte umfasst

- Berechnen von Auswerteinformationen und Verifizierungsinformationen, wobei die Auswerteinformationen in Abhängigkeit eines geheimen Schlüssels berechnet werden, und wobei der zumindest eine Teil des Computerprogramms mit zumindest einem Unterbrechungspunkt zur Initiierung der Ausführung einer Momentaufnahmeprozedur und eine Hash-Funktion bereitgestellt wird, und wobei die Verifizierungsinformationen in Abhängigkeit von dem zumindest einen Teil des Computerprogramms, von Momentaufnahmeinformationen und einem Verifizierungsschlüssel, berechnet werden,

und wobei die Zeugnisprozedur die Schritte umfasst

- Ausführen, in einem Speicher eines Computergeräts, des zumindest einen Teils des Computerprogramms, umfassend den zumindest einen definierten Unterbrechungspunkt bei bestimmte Eingabedaten,
- nachdem ein Unterbrechungspunkt während der Ausführung von dem zumindest einen Teil des Computerprogramms erreicht wurde, Berechnen von Momentaufnahmedaten durch Ausführen der Momentaufnahmeprozedur durch eine vertrauenswürdige Ausführungsumgebungsentität von dem Computergerät, wobei die Momentaufnahmeprozedur einen aktuellen Status von Ausgabedaten des zumindest einen Teils des ausgeführten Computerprogramms ermittelt und die Hashfunktion auf den aktuellen Status anwendet,
- nach Beendigung der Momentaufnahmeprozedur, Wiederaufnehmen der Ausführung des zumindest einen Teils des Computerprogramms,
- zeitweises Speichern der berechneten Momentaufnahmedaten, die mit dem Unterbrechungspunkt verbunden sind,
- Signieren der berechneten Momentaufnahmedaten mit dem geheimen Schlüssel, um Zeugnisdaten zu erhalten, und
- Bereitstellen von verifizierbaren Zeugnisinformationen umfassend die Verifizierungsinformationen, die Eingabedaten und die Zeugnisdaten.

2. Verfahren gemäß Anspruch 1, wobei die Erzeugungsprozedur den Schritt umfasst, durch Benutzung der Momentaufnahmeinformationen ein oder mehrere Unterbrechungspunkte in ein Computerprogramm ohne Unterbrechungspunkte einzubringen, vorzugsweise in Form einer Momentaufnahmeeinbringprozedur, vorzugsweise wobei zum Ausführen einer Mehrzahl von zumindest Teilen des Computerprogramms mit unterschiedlichen Eingaben das Einbringen von zumindest einem Unterbrechungspunkt auf Teile jedes Computerprogramms angewendet wird.

3. Verfahren gemäß einem der Ansprüche 1-2, wobei zumindest der Teil des Computerprogramms in einem Bereich des Speichers ausgeführt wird, zu dem nur die vertrauenswürdige Ausführungsumgebungsentität Zugriff hat und/oder

wobei die Hashfunktion als kryptographische Hashfunktion bereitgestellt wird, vorzugsweise wobei die kryptographische Hashfunktion Ergebnisse mit fester Länge unabhängig von der Eingabe bereitstellt
und/oder
wobei die Momentaufnahmedaten durch Anwendung der Hashfunktion auf den ermittelten Ausgabedatenstatus und die vorher berechneten Momentaufnahmedaten berechnet werden, vorzugsweise wobei die vorher berechneten Momentaufnahmedaten und der ermittelte aktuelle Status der Ausgabedaten aneinander angehängt werden, bevor die Hashfunktion angewendet wird.

4. Verfahren zum Verifizieren einer Ausführung zumindest eines Teils eines Computerprogramms, wobei das Computerprogramm eine Anzahl von computerlesbaren Instruktionen, die auf einer Computerentität ausgeführt werden sollen, aufweist, umfassend die Schritte

- Erhalten von verifizierbaren Zeugnisinformationen, bereitgestellt durch ein Verfahren gemäß einem der Ansprüche 1-3,
- Ausführen der Zeugnisprozedur des Verfahrens gemäß einem der Ansprüche 1-3 mit zumindest dem Teil des Computerprogramms, mit dem zumindest einen definierten Unterbrechungspunkt mit den Eingabedaten,
- Verifizieren der Ausführung zumindest des Teils des Computerprogramms durch Auswerten der berechneten Momentaufnahmedaten, erhalten von dem ausgeführten Teil des Computerprogramms und den erhaltenen verifizierbaren Zeugnisinformationen.

5. Verfahren zum Verifizieren von übertragenen Daten, vorzugsweise digitales Vermögen repräsentierend, zwischen einer ersten Entität und einer zweiten Entität, umfassend die Schritte

- Bereitstellen, durch die erste Entität, von ersten Informationen an die zweite Entität, umfassend Informationen über die Daten, die übertragen werden sollen und Vertragsinformationen für diese Daten, wobei die Vertragsdaten verifizierbare Zeugnisinformationen für die Daten umfassen, vorzugsweise für die Qualität der Daten, wobei die verifizierbaren Zeugnisinformationen für die Daten berechnet werden durch Ausführen eines Verfahrens gemäß einem der Ansprüche 1-3 und eine Signatur für die ersten Informationen,
- Verifizieren, durch die zweite Entität, der ersten Informationen durch Durchführen eines Verfahrens gemäß Anspruch 4, unter Benutzung der bereitgestellten verifizierbaren Zeugnisinformationen, zum Verifizieren der Zeugnisinformationen und/oder durch Validieren der Vertragsinformationen unter Benutzung der Verifizierungsinformationen, der Vertragsinformationen und der Signatur für die ersten Informationen,
vorzugsweise wobei
die zweite Entität eine Vermittlungsentität zum Übertragen von Daten von der ersten Entität zu einer dritten Entität ist, wobei die ersten Informationen, die von der ersten Entität erhalten wurden, durch die zweite Entität an die dritte Entität zusammen mit einer Signatur der zweiten Entität an die dritte Entität bereitgestellt werden, vorzugsweise wobei
die bereitgestellten Vertragsinformationen, bereitgestellt durch die zweite Entität, verifiziert werden durch die dritte Entität, durch Ausführung eines Verfahrens gemäß Anspruch 4 unter Benutzung der verifizierbaren Zeugnisinformationen, und wobei die verifizierten Vertragsinformationen überprüft werden und im Falle eines positiven Ergebnisses Akzeptierinformationen umfassend Übereinstimmungsinformationen für die Daten und verifizierbare Zeugnisinformationen für die Übereinstimmungsinformationen und eine berechnete Signatur für die Akzeptierinformationen der dritten Entität der zweiten Entität bereitgestellt werden, wobei die verifizierbaren Zeugnisinformationen für die Übereinstimmungsinformationen mittels Durchführung eines Verfahrens gemäß einem der Ansprüche 1-3 berechnet werden.

6. Verfahren gemäß Anspruch 5, wobei Vertragsinformationen und verifizierbare Zeugnisinformationen, welche durch zumindest eine der Entitäten empfangen werden, vorzugsweise durch jede Entität, unter Benutzung der verifizierbaren Zeugnisinformationen verifiziert werden durch Ausführen eines Verfahrens gemäß Anspruch 4.

**7.** Verfahren gemäß einem der Ansprüche 5-6, wobei der ersten oder der zweiten Entität Forderungsinformationen bereitgestellt werden, umfassend eine Beschreibung der Daten, die gefordert werden und Vertragsinformationen für diese Daten, wobei die Vertragsinformationen verifizierbare Zeugnisinformationen für diese Daten umfassen, vorzugsweise für die Qualität der Daten, und wobei die verifizierbaren Zeugnisinformationen für diese Daten mittels Durchführen eines Verfahrens gemäß einem der Ansprüche 1-3 und einer Signatur für die geforderten Daten berechnet werden, berechnet durch eine Entität, die die Daten anfordert und/oder
wobei Zufallsdurchführungsinformationen durch eine Entität, die Informationen einer anderen Entität bereitstellt und in die Informationen eingebracht wird, berechnet werden, vorzugsweise durch alle nicht-vermittelnden Entitäten, und/oder wobei nach erfolgreicher Verifikation und/oder Validierung von Vertragsdaten und/oder von den Übereinstimmungsinformationen die entsprechenden Informationen durch eine Vermittlungsentität in der Blockkette gespeichert werden.

**8.** Computerentität zum Bereitstellen von verifizierbaren Zeugnisinformationen für eine Ausführung zumindest eines Teils eines Computerprogramms gemäß einem der Ansprüche 1-3, wobei das Computerprogramm eine Anzahl von computerlesbaren Instruktionen, die auf einer Computerentität ausgeführt werden sollen, aufweist, wobei die Computerentität ausgebildet ist, zum

- Berechnen von Auswerteinformationen und Verifizierungsinformationen, wobei die Auswerteinformationen in Abhängigkeit eines geheimen Schlüssels berechnet werden, und wobei der zumindest eine Teil des Computerprogramms mit zumindest einem Unterbrechungspunkt zur Initiierung der Ausführung einer Momentaufnahmeprozedur und einer Hash-Funktion bereitgestellt wird, und wobei die Verifizierungsinformationen in Abhängigkeit von dem zumindest einen Teil des Computerprogramms, von Momentaufnahmeinformationen und einem Verifizierungsschlüssel berechnet werden,
- Ausführen, in einem Speicher eines Computergeräts, zumindest des einen Teils des Computerprogramms umfassend den zumindest einen definierten Unterbrechungspunkt auf bestimmte Eingabedaten,
- nachdem ein Unterbrechungspunkt während der Ausführung von dem zumindest einen Teil des Computerprogramms erreicht wurde, Berechnen von Momentaufnahmedaten durch Ausführen der Momentaufnahmeprozedur durch eine vertrauenswürdige Ausführungsumgebungsentität von dem Computergerät, wobei die Momentaufnahmeprozedur einen aktuellen Status von Ausgabedaten des zumindest einen Teils des ausgeführten Computerprogramms ermittelt und die Hashfunktion auf den aktuellen Status anwendet,
- nach Beendigung der Momentaufnahmeprozedur, Wiederaufnehmen der Ausführung des Teils des Computerprogramms,
- zeitweises Speichern der berechneten Momentaufnahmedaten, die mit dem Unterbrechungspunkt verbunden sind,
- Signieren der berechneten Momentaufnahmedaten mit dem geheimen Schlüssel, um Zeugnisdaten zu erhalten, und
- Bereitstellen von verifizierbaren Zeugnisinformationen umfassend die Verifizierungsinformation, die Eingabedaten und die Zeugnisdaten.

**9.** System zum Verifizieren von übertragenen Daten, vorzugsweise digitales Vermögen repräsentierend, zwischen einer ersten Entität und einer dritten Entität, wobei das System die erste Entität und die zweite Entität umfasst, wobei die erste Entität ausgebildet ist, zum

- Bereitstellen erster Informationen an die dritte Entität, über eine Vermittlungsentität gemäß Anspruch 11, umfassend Informationen über die Daten, die ausgetauscht werden sollen, und Vertragsinformationen für diese Daten, umfassend verifizierbare Zeugnisinformationen für die Daten, vorzugsweise für die Qualität der Daten, wobei die verifizierbaren Zeugnisinformationen für die Daten durch Ausführen eines Verfahrens gemäß einem der Ansprüche 1-3 mit einer Computerentität gemäß Anspruch 8 und eine Signatur für die ersten Informationen, berechnet werden, und wobei die dritte Entität ausgebildet ist zum
- Verifizieren der ersten Informationen, vorzugsweise der Vertragsinformationen, durch Durchführen eines Verfahrens gemäß Anspruch 4 unter Benutzung der bereitgestellten verifizierbaren Zeugnisinformationen zum Verifizieren der Zeugnisdaten und/oder durch Validieren der Vertragsinformationen unter Benutzung der verifizierbaren Zeugnisinformationen, der Vertragsinformationen und der Signatur für die ersten Informationen, wobei die dritte Entität ausgebildet sein kann zum

  ◦ Überprüfen der verifizierten Vertragsinformationen für die Daten und im Falle eines positiven Ergebnisses
  ◦ Bereitstellen von Akzeptierinformationen umfassend Übereinstimmungsinformationen für die Daten und verifizierbare Zeugnisinformationen für die Übereinstimmungsinformationen und eine berechnete Signatur für die Akzeptierinformationen der dritten Entität, wobei die verifizierbaren Zeugnisinformationen für die Übereinstimmungsinformationen berechnet werden mittels Durchführung eines Verfahrens gemäß einem der Ansprüche 1-3.

10. Eine Bereitstellungsentität zum Bereitstellen von Daten, vorzugsweise digitales Vermögen repräsentierend, für eine dritte Entität, welche ausgebildet ist, zum

- Bereitstellen erster Informationen an die dritte Entität, umfassend Informationen über die Daten, die ausgetauscht werden sollen, und Vertragsinformationen für diese Daten, umfassend verifizierbare Zeugnisinformationen für die Daten, vorzugsweise für die Qualität der Daten, wobei die verifizierbaren Zeugnisinformationen für die Daten berechnet werden durch Ausführen eines Verfahrens gemäß einem der Ansprüche 1-3 und eine Signatur für die ersten Informationen,

und wobei die Bereitstellungsentität weiter ausgebildet sein kann zum

- Erhalten einer Anforderungsnachricht umfassend Anforderungsinformationen von der dritten Entität, vorzugsweise über eine Vermittlungsentität, wobei die Anforderungsnachricht eine Beschreibung der Daten, die angefordert werden, und Vertragsinformationen für diese Daten beinhaltet, umfassend verifizierbare Zeugnisinformationen für diese Daten, vorzugsweise für die Qualität der Daten, und wobei die verifizierbaren Zeugnisinformationen für diese Anforderungsinformationen berechnet werden mittels Durchführen eines Verfahrens gemäß einem der Ansprüche 1-3 und einer Signatur für die Anforderungsinformationen von der dritten Entität,
- Verifizieren der Anforderungsinformationen durch Ausführung eines Verfahrens gemäß Anspruch 4 unter Benutzung der bereitgestellten verifizierbaren Zeugnisinformationen und
- Initiieren des Bereitstellens von Unterstützungsinformationen für die Anforderungsinformationen nach positiver Verifizierung.

11. Vermittlungsentität für das Weiterleiten und/oder Hinzufügen von Daten, vorzugsweise digitales Vermögen repräsentierend, zwischen einer dritten und einer ersten Entität, ausgebildet zum Durchführen zumindest eines der folgenden Schritte:

- Verifizieren von erhaltenen ersten Informationen von der ersten Entität durch Durchführen eines Verfahrens gemäß Anspruch 4 unter Benutzung von bereitgestellten verifizierbaren Zeugnisinformationen zur Verifizierung und durch Validierung von Vertragsinformationen,
- Bereitstellen zumindest der ersten Informationen der dritten Entität zusammen mit einer berechneten Signatur für die ersten Informationen nach positiver Verifizierung,
- Verifizieren erhaltener Akzeptierinformationen unter Benutzung bereitgestellter verifizierbarer Zeugnisinformationen für die Akzeptierinformationen und einer erhaltenen Signatur,
- Hinzufügen zusätzlicher Daten zu den ersten Informationen und/oder den Akzeptierinformationen, vorzugsweise wobei die zusätzlichen Daten zusätzliche Vertragsinformationen umfassen,
- Bereitstellen von Akzeptierinformationen der ersten Entität nach positiver Verifikation.

12. Empfangsentität zum Anfordern von Daten und/oder Erhalten von angeforderten Daten, ausgebildet zum Durchführen zumindest einer der Schritte:

- Bereitstellen von Anforderungsinformationen einer ersten Entität, wobei die Anforderungsinformationen eine Beschreibung von Daten, die angefordert werden sollen, und Vertragsinformationen umfassen, umfassend verifizierbare Zeugnisinformationen für die angeforderten Daten, vorzugsweise für die Qualität der Daten, wobei die verifizierbaren Zeugnisinformationen für die Anforderungsinformationen berechnet werden mittels einem Verfahren gemäß einem der Ansprüche 1-3 und einer Signatur für die Anforderungsinformationen von der Empfangsentität,
- Empfangen von Unterstützungsinformationen von der ersten Entität zusammen mit einer berechneten Signatur für die Unterstützungsinformationen, wobei die Unterstützungsinformationen eine Beschreibung der Daten, die bereitgestellt werden sollen, und Vertragsinformationen für die Daten umfassen, umfassend verifizierbare Zeugnisinformationen für diese Daten, vorzugsweise für die Qualität der Daten, wobei die verifizierbaren Zeugnisinformationen für die Daten berechnet werden mit einem Verfahren gemäß einem der Ansprüche 1-3 und einer Signatur für die Unterstützungsinformationen, die von der ersten Entität berechnet werden,
- Verifizieren von Vertragsdaten der erhaltenen Unterstützungsdaten, wobei die Vertragsdaten in den Unterstützungsdaten bereitgestellt werden und Durchführen eines Verfahrens gemäß Anspruch 4 unter Benutzung der bereitgestellten verifizierbaren Zeugnisinformationen,

- Überprüfen der verifizierten Vertragsinformationen für die Daten und bei einem positiven Ergebnis, Bereitstellen von Akzeptierinformationen umfassend Übereinstimmungsinformationen für die Daten und verifizierbare Zeugnisinformationen für die Übereinstimmungsinformationen und einer berechneten Signatur für die Akzeptierinformationen der ersten Entität, wobei die verifizierbaren Zeugnisinformationen für die Übereinstimmungsinformationen mit einem Verfahren gemäß einem der Ansprüche 1-3 berechnet werden.

13. Computerlesbares Medium, welches ein Programm speichert, das einen Computer veranlasst ein Verfahren zum Bereitstellen von verifizierbaren Zeugnisinformationen für eine Ausführung eines Teils eines Computerprogramms auszuführen, wobei das Computerprogramm eine Anzahl von computerlesbaren Instruktionen, die auf einer Computerentität ausgeführt werden sollen, aufweist, wobei das Verfahren eine Erzeugungsprozedur und eine Zeugnisprozedur aufweist, wobei

    die Erzeugungsprozedur die Schritte umfasst

        - Berechnen von Auswerteinformationen und Verifizierungsinformationen, wobei die Auswerteinformationen in Abhängigkeit eines geheimen Schlüssels berechnet werden, und wobei der zumindest eine Teil des Computerprogramms mit zumindest einem Unterbrechungspunkt zur Initiierung der Ausführung einer Momentaufnahmeprozedur und eine Hash-Funktion bereitgestellt wird, und wobei die Verifizierungsinformationen in Abhängigkeit von dem zumindest einen Teil des Computerprogramms, von Momentaufnahmeinformationen und einem Verifizierungsschlüssel, berechnet werden,

    und wobei die Zeugnisprozedur die Schritte umfasst

        - Ausführen, in einem Speicher eines Computergeräts, des zumindest einen Teils des Computerprogramms, umfassend den zumindest einen definierten Unterbrechungspunkt bei bestimmte Eingabedaten,
        - nachdem ein Unterbrechungspunkt während der Ausführung von dem zumindest einen Teil des Computerprogramms erreicht wurde, Berechnen von Momentaufnahmedaten durch Ausführen der Momentaufnahmeprozedur durch eine vertrauenswürdige Ausführungsumgebungsentität von dem Computergerät, wobei die Momentaufnahmeprozedur einen aktuellen Status von Ausgabedaten des zumindest einen Teils des ausgeführten Computerprogramms ermittelt und die Hashfunktion auf den aktuellen Status anwendet,
        - nach Beendigung der Momentaufnahmeprozedur, Wiederaufnehmen der Ausführung des zumindest einen Teils des Computerprogramms,
        - zeitweises Speichern der berechneten Momentaufnahmedaten, die mit dem Unterbrechungspunkt verbunden sind,
        - Signieren der berechneten Momentaufnahmedaten mit dem geheimen Schlüssel, um Zeugnisdaten zu erhalten, und
        - Bereitstellen von verifizierbaren Zeugnisinformationen umfassend die Verifizierungsinformationen, die Eingabedaten und die Zeugnisdaten.

14. Computerlesbares Medium, welches ein Programm speichert, das einen Computer veranlasst ein Verfahren zum Verifizieren einer Ausführung zumindest eines Teils eines Computerprogramms, wobei das Computerprogramm eine Anzahl von computerlesbaren Instruktionen, die auf einer Computerentität ausgeführt werden sollen, aufweist, umfassend die Schritte

        - Erhalten von verifizierbaren Zeugnisinformationen, bereitgestellt durch ein Verfahren gemäß einem der Ansprüche 1-3,
        - Ausführen der Zeugnisprozedur des Verfahrens gemäß einem der Ansprüche 1-3 mit zumindest dem Teil des Computerprogramms, mit dem zumindest einen definierten Unterbrechungspunkt mit den Eingabedaten,
        - Verifizieren der Ausführung zumindest des Teils des Computerprogramms durch Auswerten der berechneten Momentaufnahmedaten, erhalten von dem ausgeführten Teil des Computerprogramms und den erhaltenen verifizierbaren Zeugnisinformationen.

15. Computerlesbares Medium, welches ein Programm speichert, das einen Computer veranlasst ein Verfahren zum Verifizieren von übertragenen Daten, vorzugsweise digitales Vermögen repräsentierend, zwischen einer ersten Entität und einer zweiten Entität, umfassend die Schritte

        - Bereitstellen, durch die erste Entität, von ersten Informationen an die zweite Entität, umfassend Informationen über die Daten, die übertragen werden sollen und Vertragsinformationen für diese Daten, wobei die Vertragsdaten verifizierbare Zeugnisinformationen für die Daten umfassen, vorzugsweise für die Qualität der Daten, wobei die verifizierbaren Zeugnisinformationen für die Daten berechnet werden durch Ausführen eines Verfahrens gemäß einem der Ansprüche 1-3 und eine Signatur für die ersten Informationen,

- Verifizieren, durch die zweite Entität, der ersten Informationen durch Durchführen eines Verfahrens gemäß Anspruch 4, unter Benutzung der bereitgestellten verifizierbaren Zeugnisinformationen, zum Verifizieren der Zeugnisinformationen und/oder durch Validieren der Vertragsinformationen unter Benutzung der Verifizierungsinformationen, der Vertragsinformationen und der Signatur für die ersten Informationen.

**Revendications**

1. Procédé de fourniture d'informations de témoignage vérifiable dans le cadre de l'exécution d'au moins une partie d'un programme informatique, ledit programme informatique comprenant une série d'instructions lisibles par ordinateur devant être exécutées sur une entité informatique, le procédé comprenant une procédure de génération et une procédure de témoignage, dans lequel

   ladite procédure de génération comprend l'étape ci-dessous consistant à :

   - calculer des informations d'évaluation et des informations de vérification, dans lesquelles lesdites informations d'évaluation sont calculées en fonction d'une clé secrète, au moins ladite partie dudit programme informatique étant pourvue d'au moins un arrêt de contrôle pour initier l'exécution d'une procédure d'instantané et d'une fonction de hachage, et dans lesquelles lesdites informations de vérification sont calculées en fonction d'au moins ladite partie dudit programme informatique, d'informations d'instantané, et d'une clé de vérification ; et

   dans lequel ladite procédure de témoignage comprend les étapes ci-dessous consistant à :

   - exécuter, dans une mémoire d'un dispositif informatique, au moins ladite partie dudit programme informatique comprenant ledit au moins un arrêt de contrôle défini, sur certaines données d'entrée ;
   - lorsqu'est atteint un arrêt de contrôle pendant l'exécution d'au moins ladite partie dudit programme informatique, calculer des données d'instantané en exécutant ladite procédure d'instantané par le biais d'une entité d'environnement d'exécution de confiance dudit dispositif informatique, ladite procédure d'instantané déterminant un état en cours de données de sortie d'au moins ladite partie dudit programme informatique exécuté, et appliquant ladite fonction de hachage sur ledit état déterminé ;
   - après l'achèvement de ladite procédure d'instantané, reprendre l'exécution d'au moins ladite partie dudit programme informatique ;
   - stocker temporairement lesdites données d'instantané calculées associées audit arrêt de contrôle ;
   - signer lesdites données d'instantané calculées, avec ladite clé secrète, en vue de fournir des données de témoignage ; et
   - fournir des informations de témoignage vérifiable incluant lesdites informations de vérification, lesdites données d'entrée et lesdites données de témoignage.

2. Procédé selon la revendication 1, dans lequel ladite procédure de génération comprend l'étape consistant à insérer un ou plusieurs arrêts de contrôle dans un programme informatique exempt d'arrêts de contrôle, en utilisant lesdites informations d'instantané, de préférence sous la forme d'une procédure d'insertion d'instantané, de préférence, dans lequel, pour exécuter une pluralité d'au moins des parties de programmes informatiques avec différentes entrées, ladite étape d'insertion d'au moins un arrêt de contrôle est appliquée auxdites parties de chaque programme informatique.

3. Procédé selon l'une quelconque des revendications 1 à 2, dans lequel au moins ladite partie dudit programme informatique est exécutée dans une zone de ladite mémoire à laquelle seule l'entité d'environnement d'exécution de confiance a accès ; et/ou

   dans lequel ladite fonction de hachage est fournie sous la forme d'une fonction de hachage cryptographique, de préférence dans lequel ladite fonction de hachage cryptographique fournit des résultats présentant une longueur fixe indépendante de l'entrée ; et/ou
   dans lequel lesdites données d'instantané sont calculées en appliquant ladite fonction de hachage sur ledit état de données de sortie déterminé, et à des données d'instantané calculées antérieurement, de préférence, dans lequel lesdites données d'instantané calculées antérieurement et ledit état en cours déterminé des données de sortie sont concaténés avant d'appliquer ladite fonction de hachage.

4. Procédé de vérification de l'exécution d'au moins une partie d'un programme informatique, ledit programme informatique comprenant une série d'instructions lisibles par ordinateur devant être exécutées sur une entité informatique, le procédé comprenant les étapes ci-dessous consistant à :

- recevoir des informations de témoignage vérifiable fournies par un procédé selon l'une quelconque des revendications 1 à 3 ;
- exécuter la procédure de témoignage du procédé selon l'une quelconque des revendications 1 à 3, avec au moins ladite partie dudit programme informatique, où ledit au moins un arrêt de contrôle est défini sur lesdites données d'entrée ;
- vérifier ladite exécution d'au moins ladite partie dudit programme informatique en évaluant lesdites données d'instantané calculées reçues en provenance de la partie exécutée dudit programme informatique et lesdites informations de témoignage vérifiable reçues.

5. Procédé de vérification de données transmises, représentant de préférence des actifs numériques, entre une première entité et une deuxième entité, le procédé comprenant les étapes ci-dessous consistant à :

- fournir, par le biais de ladite première entité, des premières informations, à ladite deuxième entité, incluant des informations desdites données à transmettre et des informations de contrat pour lesdites données, lesdites informations de contrat incluant des informations de témoignage vérifiable pour lesdites données, de préférence pour la qualité desdites données, lesdites informations de témoignage vérifiable pour lesdites données étant calculées en mettant en œuvre un procédé selon l'une quelconque des revendications 1 à 3, et une signature pour lesdites premières informations ;
- vérifier, par le biais de ladite deuxième entité, lesdites premières informations, en mettant en oeuvre un procédé selon la revendication 4, en utilisant lesdites informations de témoignage vérifiable fournies pour la vérification des données de témoignage, et/ou en validant lesdites informations de contrat, en utilisant lesdites informations de vérification, lesdites informations de contrat et ladite signature pour lesdites premières informations, de préférence, dans lequel :
ladite deuxième entité est une entité médiatrice pour transmettre des données de ladite première entité à une troisième entité, dans lequel lesdites premières informations reçues en provenance de ladite première entité sont fournies par ladite deuxième entité à ladite troisième entité, conjointement avec une signature de ladite deuxième entité à ladite troisième entité, de préférence, dans lequel :
lesdites informations de contrat fournies, lesquelles sont fournies par ladite deuxième entité, sont vérifiées par ladite troisième entité, en mettant en œuvre un procédé selon la revendication 4, en utilisant lesdites informations de témoignage vérifiable fournies, et lesdites informations de contrat vérifiées sont contrôlées et, suite à un résultat positif, des informations d'acceptation incluant des informations d'accord pour lesdites données et des informations de témoignage vérifiable pour lesdites informations d'accord et une signature calculée pour lesdites informations d'acceptation de ladite troisième entité, sont fournies à ladite deuxième entité, dans lequel lesdites informations de témoignage vérifiable pour lesdites informations d'accord sont calculées en mettant en œuvre un procédé selon l'une quelconque des revendications 1 à 3.

6. Procédé selon la revendication 5, dans lequel des informations de contrat et des informations de témoignage vérifiable reçues par au moins l'une des entités, de préférence par chaque entité, sont vérifiées en utilisant lesdites informations de témoignage vérifiable en mettant en œuvre un procédé selon la revendication 4.

7. Procédé selon l'une quelconque des revendications 5 à 6, dans lequel des informations de demande sont fournies à ladite première entité ou à ladite deuxième entité, incluant une description desdites données à demander et des informations de contrat pour lesdites données, lesdites informations de contrat incluant des informations de témoignage vérifiable pour lesdites données, de préférence pour la qualité desdites données, des informations de témoignage vérifiable pour lesdites données étant calculées en mettant en œuvre un procédé selon l'une quelconque des revendications 1 à 3, et une signature pour lesdites informations de demande, calculée par une entité demandant des données ; et/ou
dans lequel des informations transactionnelles aléatoires sont calculées par une entité fournissant des informations à une autre entité, et sont incluses dans lesdites informations, de préférence par toutes les entités non médiatrices ; et/ou dans lequel, après une vérification et/ou une validation réussies d'informations de contrat et/ou desdites informations d'accord, les informations correspondantes sont stockées par une entité médiatrice, dans une chaîne de blocs.

8. Entité informatique destinée à fournir des informations de témoignage vérifiable dans le cadre de l'exécution d'au moins une partie d'un programme informatique conformément à un procédé selon l'une quelconque des revendications 1 à 3, ledit programme informatique comprenant une série d'instructions lisibles par ordinateur devant être exécutées sur ladite entité informatique, ladite entité informatique étant apte à :

- calculer des informations d'évaluation et des informations de vérification, dans lesquelles lesdites informations d'évaluation sont calculées en fonction d'une clé secrète, au moins ladite partie dudit programme informatique étant pourvue d'au moins un arrêt de contrôle pour initier l'exécution d'une procédure d'instantané et d'une fonction de hachage, et dans lesquelles lesdites informations de vérification sont calculées en fonction d'au moins ladite partie dudit programme informatique, d'informations d'instantané, et d'une clé de vérification ; et
- exécuter, dans une mémoire d'un dispositif informatique, au moins ladite partie dudit programme informatique comprenant ledit au moins un arrêt de contrôle défini, sur certaines données d'entrée ;
- lorsqu'est atteint un arrêt de contrôle pendant l'exécution d'au moins ladite partie dudit programme informatique, calculer des données d'instantané en exécutant ladite procédure d'instantané par le biais d'une entité d'environnement d'exécution de confiance dudit dispositif informatique, ladite procédure d'instantané déterminant un état en cours de données de sortie d'au moins ladite partie dudit programme informatique exécuté, et appliquant ladite fonction de hachage sur ledit état déterminé ;
- reprendre l'exécution d'au moins ladite partie dudit programme informatique, après l'achèvement de ladite procédure d'instantané ;
- stocker temporairement lesdites données d'instantané calculées associées audit arrêt de contrôle ;
- signer lesdites données d'instantané calculées, avec ladite clé secrète, en vue de fournir des données de témoignage ; et
- fournir des informations de témoignage vérifiable incluant lesdites informations de vérification, lesdites données d'entrée et lesdites données de témoignage.

9. Système destiné à vérifier des données d'échange, représentant de préférence des actifs numériques, entre une première entité et une troisième entité, le système comprenant la première entité et une deuxième entité, ladite première entité étant apte à :

- fournir des premières informations, à ladite troisième entité, par l'intermédiaire d'une entité médiatrice selon la revendication 11, incluant des informations desdites données à échanger, et des informations de contrat pour lesdites données, incluant des informations de témoignage vérifiable pour lesdites données, de préférence pour la qualité desdites données, lesdites informations de témoignage vérifiable pour lesdites données étant calculées en mettant en œuvre un procédé selon l'une quelconque des revendications 1 à 3, avec une entité informatique selon la revendication 8, et une signature pour lesdites premières informations ; et ladite troisième entité étant apte à :
- vérifier lesdites premières informations, de préférence lesdites informations de contrat, en mettant en œuvre un procédé selon la revendication 4, en utilisant lesdites informations de témoignage vérifiable fournies pour la vérification des données de témoignage, et/ou en validant lesdites informations de contrat, en utilisant lesdites informations de vérification, lesdites informations de contrat et ladite signature pour lesdites premières informations ;

dans lequel ladite troisième entité peut être adaptée pour :
○ vérifier lesdites informations de contrat vérifiées pour lesdites données, et suite à un résultat positif :
○ fournir des informations d'acceptation incluant des informations de contrat pour lesdites données et des informations de témoignage vérifiable pour lesdites informations de contrat, et une signature calculée pour lesdites informations d'acceptation de la troisième entité, lesdites informations de témoignage vérifiable pour lesdites informations de contrat étant calculées en mettant en œuvre le procédé selon l'une quelconque des revendications 1 à 3.

10. Entité de fourniture destinée à fournir des données, représentant de préférence des actifs numériques, pour une troisième entité, ladite entité étant apte à :

- fournir des premières informations, à ladite troisième entité, incluant des informations desdites données à échanger et des informations de contrat pour lesdites données, incluant des informations de témoignage vérifiable pour lesdites données, de préférence pour la qualité desdites données, lesdites informations de témoignage vérifiable pour lesdites données étant calculées par un procédé selon l'une quelconque des revendications 1 à 3, et une signature pour lesdites premières informations ; et

dans lequel ladite entité de fourniture peut en outre être adaptée pour :

- recevoir un message de demande incluant des informations de demande en provenance de ladite troisième entité, de préférence par l'intermédiaire d'une entité médiatrice, ledit message de demande incluant une description de données demandées et des informations de contrat incluant des informations de témoignage vérifiable pour lesdites données demandées, de préférence pour la qualité desdites données, lesdites informations de témoignage vérifiable pour lesdites informations de demande étant calculées par un procédé selon l'une quelconque des revendications 1 à 3, et une signature pour lesdites informations de demande de ladite troisième entité ;
- vérifier lesdites informations de demande, en mettant en oeuvre un procédé selon la revendication 4 en utilisant lesdites informations de témoignage vérifiable fournies ; et
- initier ladite étape de fourniture d'informations de fourniture pour lesdites informations de demande suite à une vérification positive.

11. Entité médiatrice pour relier des données et/ou ajouter des données, représentant de préférence des actifs numériques, entre une troisième entité et une première entité, apte à mettre en oeuvre au moins l'une des étapes ci-dessous consistant à :

- vérifier des premières informations reçues en provenance de la première entité, en mettant en œuvre un procédé selon la revendication 4, en utilisant des informations de témoignage vérifiable fournies en vue d'une vérification, et en validant des informations de contrat ;
- fournir au moins lesdites premières informations à ladite troisième entité, conjointement avec une signature calculée pour lesdites premières informations suite à une vérification positive ;
- vérifier des informations d'acceptation reçues, en utilisant des informations de témoignage vérifiable fournies pour lesdites informations d'acceptation, et une signature reçue ;
- ajouter des données supplémentaires auxdites premières informations et/ou auxdites informations d'acceptation, de préférence dans lesquelles lesdites données supplémentaires incluent des informations de contrat supplémentaires ;
- fournir lesdites informations d'acceptation à ladite première entité, suite à une vérification positive.

12. Entité réceptrice destinée à demander des données et/ou à recevoir des données demandées, apte à mettre en œuvre au moins l'une des étapes ci-dessous consistant à :

- fournir des informations de demande pour une première entité, lesdites informations de demande incluant une description de données devant être demandées et des informations de contrat incluant des informations de témoignage vérifiable pour lesdites données demandées, de préférence pour la qualité desdites données, lesdites informations de témoignage vérifiable pour lesdites informations de demande étant calculées par un procédé selon l'une quelconque des revendications 1 à 3 et une signature pour lesdites informations de demande de ladite entité réceptrice ;
- recevoir des informations de fourniture en provenance de la première entité, conjointement avec une signature calculée pour lesdites informations de fourniture, lesdites informations de fourniture incluant une description desdites données devant être fournies, et des informations de contrat pour lesdites données, incluant des informations de témoignage vérifiable pour lesdites données, de préférence pour la qualité desdites données, lesdites informations de témoignage vérifiable pour lesdites données étant calculées par un procédé selon l'une quelconque des revendications 1 à 3, et ladite signature pour lesdites informations de fourniture étant calculée par ladite première entité ;
- vérifier des informations de contrat d'informations de fourniture reçues, lesdites informations de contrat étant fournies dans lesdites informations de fourniture, et mettre en oeuvre un procédé selon la revendication 4 en utilisant lesdites informations de témoignage vérifiable fournies ; et
- contrôler lesdites informations de contrat vérifiées pour lesdites données et, suite à un résultat positif, fournir des informations d'acceptation incluant des informations d'accord pour lesdites données, et des informations de témoignage vérifiable pour lesdites informations d'accord, et une signature calculée pour lesdites informations d'acceptation, à ladite première entité, lesdites informations de témoignage vérifiable pour lesdites informations d'accord étant calculées en mettant en oeuvre le procédé selon l'une quelconque des revendications 1 à 3.

**13.** Support lisible par ordinateur stockant un programme amenant un ordinateur à exécuter un procédé de fourniture d'informations de témoignage vérifiable dans le cadre de l'exécution d'au moins une partie d'un programme informatique, ledit programme informatique comprenant une série d'instructions lisibles par ordinateur devant être exécutées sur une entité informatique, le procédé comprenant une procédure de génération et une procédure de témoignage, dans lequel ladite procédure de génération comprend l'étape ci-dessous consistant à :

- calculer des informations d'évaluation et des informations de vérification, dans lesquelles lesdites informations d'évaluation sont calculées en fonction d'une clé secrète, au moins ladite partie dudit programme informatique étant pourvue d'au moins un arrêt de contrôle pour initier l'exécution d'une procédure d'instantané et d'une fonction de hachage, et dans lesquelles lesdites informations de vérification sont calculées en fonction d'au moins ladite partie dudit programme informatique, d'informations d'instantané, et d'une clé de vérification ; et

dans lequel ladite procédure de témoignage comprend les étapes ci-dessous consistant à :

- exécuter, dans une mémoire d'un dispositif informatique, au moins ladite partie dudit programme informatique comprenant ledit au moins un arrêt de contrôle défini, sur certaines données d'entrée ;
- lorsqu'est atteint un arrêt de contrôle pendant l'exécution d'au moins ladite partie dudit programme informatique, calculer des données d'instantané en exécutant ladite procédure d'instantané par le biais d'une entité d'environnement d'exécution de confiance dudit dispositif informatique, ladite procédure d'instantané déterminant un état en cours de données de sortie d'au moins ladite partie dudit programme informatique exécuté, et appliquant ladite fonction de hachage sur ledit état déterminé ;
- après l'achèvement de ladite procédure d'instantané, reprendre l'exécution d'au moins ladite partie dudit programme informatique ;
- stocker temporairement lesdites données d'instantané calculées associées audit arrêt de contrôle ;
- signer lesdites données d'instantané calculées, avec ladite clé secrète, en vue de fournir des données de témoignage ; et
- fournir des informations de témoignage vérifiable incluant lesdites informations de vérification, lesdites données d'entrée et lesdites données de témoignage.

**14.** Support lisible par ordinateur stockant un programme amenant un ordinateur à exécuter un procédé de vérification de l'exécution d'au moins une partie d'un programme informatique, ledit programme informatique comprenant une série d'instructions lisibles par ordinateur devant être exécutées sur une entité informatique, le procédé comprenant les étapes ci-dessous consistant à :

- recevoir des informations de témoignage vérifiable fournies par un procédé selon l'une quelconque des revendications 1 à 3 ;
- exécuter la procédure de témoignage du procédé selon l'une quelconque des revendications 1 à 3, avec au moins ladite partie dudit programme informatique, où ledit au moins un arrêt de contrôle est défini sur lesdites données d'entrée ; et
- vérifier ladite exécution d'au moins ladite partie dudit programme informatique en évaluant lesdites données d'instantané calculées reçues en provenance de la partie exécutée dudit programme informatique et lesdites informations de témoignage vérifiable reçues.

**15.** Support lisible par ordinateur stockant un programme amenant un ordinateur à exécuter un procédé de vérification de données transmises, représentant de préférence des actifs numériques, entre une première entité et une deuxième entité, le procédé comprenant les étapes ci-dessous consistant à :

- fournir, par le biais de ladite première entité, des premières informations, à ladite deuxième entité, incluant des informations desdites données devant être transmises et des informations de contrat pour lesdites données, lesdites informations de contrat incluant des informations de témoignage vérifiable pour lesdites données, de préférence pour la qualité desdites données, lesdites informations de témoignage vérifiable pour lesdites données étant calculées en mettant en œuvre un procédé selon l'une quelconque des revendications 1 à 3, et une signature pour lesdites premières informations ; et
- vérifier, par le biais de ladite deuxième entité, lesdites premières informations, en mettant en œuvre un procédé selon la revendication 4, en utilisant lesdites informations de témoignage vérifiable fournies pour la vérification des données de témoignage, et/ou en validant lesdites informations de contrat, en utilisant lesdites informations de vérification, lesdites informations de contrat et ladite signature pour lesdites premières informations.

2. Identify consumer

2′

Broker

(Distributed) Database
e.g. Blockchain

1. offer

3. offer

5. contract

4. contract

Producer

Consumer

compromised

Fig. 1

EP 3 471 006 B1

Fig. 2

Fig. 3

| Supplier S | Marketplace M | Buyer B |
|---|---|---|

DEMAND

if valid, relay DEMAND
to Blockchain and/or
supplier $S$

DEMAND*

SUPPLY

if valid, relay SUPPLY
to Blockchain and/or
buyer $B$

SUPPLY*

PAYMENT

if valid, relay PAYMENT
to Blockchain and/or
supplier $S$

PAYMENT

Fig. 4

**Demand Enrollment Protocol**

**Public Values:** $\mathsf{vk}_P = (\mathsf{svk}_B, H, \Phi, P)$
**Secret Values of Buyer:** $\mathsf{ek}_P = (\mathsf{ssk}_P, H, P')$
**Buyer B**                                              **Marketplace M**

$\dots\dots\dots\dots\dots\dots\dots\dots\dots\dots\dots\dots\dots$ DEMAND $\dots\dots\dots\dots\dots\dots\dots\dots\dots\dots\dots$

$\mathsf{tid} \xleftarrow{r} \{0,1\}^*$
$\tau \leftarrow \Theta.\mathsf{Testify}(\mathsf{ek}_P, x)$
let dtrm denote the
demander's contract terms
set $dtSC := (\mathsf{dtrm}, \mathsf{tid}, \mathsf{svk}_B, x, \tau)$
$\sigma_B \leftarrow \Sigma.\mathsf{Sign}(\mathsf{ssk}_B, dtSC)$

$\xrightarrow{\quad dtSC, \sigma_B \quad}$

if $\Theta.\mathsf{Verify}(\mathsf{vk}_P, x, \tau) \neq 1$
and $\Sigma.\mathsf{Verify}(\mathsf{svk}_B, dtSC, \sigma_B) \neq 1$
abort, else proceed with DEMAND*
(optionally) send $(dtSC, \sigma_B)$
to blockchain

Fig. 5a

**Extended Demand Enrollment Protocol**

**Public Values:** $\mathsf{svk}_M, \mathsf{vk}_P = (\mathsf{svk}_B, H, \Phi, P)$

**Secret Values of Marketplace:** $\mathsf{ssk}_M$

**Marketplace M**                                       **Supplier S**

...........................................DEMAND*.........................................

let **etrm** denote the
extended contract terms
set $edtSC := (dtSC, \sigma_B, \mathsf{etrm})$
$\sigma_M \leftarrow \Sigma.\mathsf{Sign}(\mathsf{ssk}_M, edtSC)$

$$\xrightarrow{\quad edtSC, \sigma_M \quad}$$

if $\Sigma.\mathsf{Verify}(\mathsf{svk}_M, edtSC, \sigma_M) \neq 1$
and/or $\Sigma.\mathsf{Verify}(\mathsf{svk}_B, dtSC, \sigma_B) \neq 1$
and/or $\Theta.\mathsf{Verify}(\mathsf{vk}_P, x, \tau) \neq 1$
abort, else proceed with PAYMENT

Fig. 5b

EP 3 471 006 B1

**Asset Supply Protocol**

**Public Values:** $\mathrm{svk}_S, \mathrm{vk}_P = (\mathrm{svk}_S, H, \Phi, P)$

**Secret Values of Supplier:** $\mathrm{ssk}_S, \mathrm{ek}_P = (\mathrm{ssk}_P, H, P')$

**Supplier S**                                                    **Marketplace M**

$\cdots\cdots\cdots\cdots\cdots\cdots\cdots\cdots\cdots\cdots\cdots$ SUPPLY $\cdots\cdots\cdots\cdots\cdots\cdots\cdots\cdots\cdots\cdots\cdots$

$\tau \leftarrow \Theta.\mathsf{Testify}(\mathrm{ek}_P, x)$

let strm denote suppliers contract terms

set $stSC := (edtSC, \sigma_M, \mathrm{strm}, \mathrm{svk}_S, x, \tau)$

$\sigma_S \leftarrow \Sigma.\mathsf{Sign}(\mathrm{ssk}_S, stSC)$

$$\xrightarrow{\quad stSC, \sigma_S \quad}$$

if $\Sigma.\mathsf{Verify}(\mathrm{svk}_S, stSC, \sigma_S) \neq 1$

and $\Theta.\mathsf{Verify}(\mathrm{vk}_P, x, \tau) \neq 1$

abort, else proceed with SUPPLY*

(optionally) send $(stSC, \sigma_S)$

to blockchain

Fig. 6a

**Extended Asset Supply Protocol**

Public Values: $\mathsf{svk}_M, \mathsf{vk}_P = (\mathsf{svk}_S, H, \Phi, P, P')$
Secret Values of Marketplace: $\mathsf{ssk}_M$

Marketplace M                                           Buyer B

$\cdots\cdots\cdots\cdots\cdots\cdots\cdots\cdots\cdots\cdots$SUPPLY*$\cdots\cdots\cdots\cdots\cdots\cdots\cdots\cdots\cdots$

let estrm denote the
extended supplier's contract terms
set $estSC := (stSC, \sigma_S, \mathsf{estrm})$
$\sigma_M \leftarrow \Sigma.\mathsf{Sign}(\mathsf{ssk}_M, etSC)$

$$\xrightarrow{\text{estSC}, \sigma_M}$$

if $\Sigma.\mathsf{Verify}(\mathsf{svk}_M, estSC, \sigma_M) \neq 1$
and/or $\Sigma.\mathsf{Verify}(\mathsf{svk}_S, stSC, \sigma_S) \neq 1$
and/or $\Theta.\mathsf{Verify}(\mathsf{vk}_P, x, \tau) \neq 1$
abort, else proceed with PAYMENT

Fig. 6b

**Payment Protocol**

**Public Values:** $\mathsf{svk}_B$

**Secret Values of Buyer:** $\mathsf{ssk}_B$

. . . . . . . . . . . . . . . . . . . . . . . . . . . . . . . . . . . . PAYMENT . . . . . . . . . . . . . . . . . . . . . . . . . . . . . . . . . . . . . . . . . . . . . .

**Buyer B**                                                       **Marketplace M**

let **pay** denote the

payment terms

set $pSC := (\mathsf{tid}, \mathsf{svk}_B, \mathsf{svk}_S, \mathsf{pay})$

$\sigma_B \leftarrow \Sigma.\mathsf{Sign}(\mathsf{ssk}_B, pSC)$

$$\xrightarrow{\;\;pSC,\ \sigma_B\;\;}$$

if $\Sigma.\mathsf{Verify}(\mathsf{svk}_B, pSC, \sigma_B) \neq 1$

abort, else forward PAYMENT

to supplier and (optionally)

send $(pSC, \sigma_B)$ to blockchain

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8712920 B2
- US 8732066 B2
- WO 2017132641 A1
- WO 2017090041 A1
- WO 2017091530 A1

**Non-patent literature cited in the description**

- **ERDEM AKTAS et al.** DARE: A Framework for Dynamic Authentication of Remote Executions. *COMPUTER SECURITY APPLICATIONS CONFERENCE, 2008. ACSAC,* 2008
- **MONROSE et al.** Distributed Execution with Remote Audit. *NDSS Symposium 1999,* 04 February 1999
- Oblivious Hashing: A Stealthy Software Integrity Verification Primitive. **YUQUN CHEN et al.** Information Hiding. Springer Berlin Heidelberg, 01 January 2003, vol. 2578, 400-414
- **CHRISTIDISKONSTANTINOS ET.** Blockchains and Smart Contracts for the Internet of Things. *IEEE ACCESS,* vol. 4, 2292-2303